# EUROPÄISCHE PATENTANMELDUNG

(11) **EP 4 258 640 A1**
(43) Veröffentlichungstag der Anmeldung: **11.10.2023**
(21) Anmeldenummer: 23164067.3
(22) Anmeldetag: 24.03.2023
(51) Int. Cl.: H04N 5/222, H04N 5/262, H04N 23/90

(54) **VERFAHREN ZUM KALIBRIEREN EINES HINTERGRUNDWIEDERGABE- UND AUFNAHMESYSTEMS**

(30) Priorität: 08.04.2022 DE 102022108578
(71) Anmelder: Arnold & Richter Cine Technik GmbH & Co. Betriebs KG, 80807 München (DE)
(72) Erfinder: BRENDEL, Harald, 80336 München (DE)
(74) Vertreter: Manitz Finsterwald Patent- und Rechtsanwaltspartnerschaft mbB

(57) **Zusammenfassung**

Bei einem Verfahren zum Kalibrieren eines Hintergrundwiedergabe- und Aufnahmesystems umfassend eine Hintergrund-Wiedergabeeinrichtung und eine Kamera wird zumindest eine Kalibrierdarstellung mittels der Hintergrund-Wiedergabeeinrichtung wiedergegeben und eine Abbildung der zumindest einen Kalibrierdarstellung mittels der Kamera erzeugt, anhand derer zumindest eine erste Transformationsvorschrift bestimmt wird, welche die Ansteuerung der Hintergrund-Wiedergabeeinrichtung betrifft. Zudem wird zumindest eine zweite Transformationsvorschrift bestimmt, welche eine Transformation von Kamerabilddaten der Kamera betrifft. Die Transformationsvorschriften werden derart bestimmt, dass die Darstellung des virtuellen Hintergrunds wie bei natürlichen Lichtverhältnissen in dem virtuellen Hintergrund und das reale Motiv wie bei natürlichen Lichtverhältnissen in dem virtuellen Bildaufnahmestudio von der Kamera erfassbar sind.

## Beschreibung

Die Erfindung betrifft ein Verfahren zum Kalibrieren eines Hintergrundwiedergabe- und Aufnahmesystems umfassend eine Hintergrund-Wiedergabeeinrichtung und eine Kamera. Die Hintergrund-Wiedergabeeinrichtung des Hintergrundwiedergabe- und Aufnahmesystems ist dazu ausgebildet, hinter oder über einem realen Motiv eine Darstellung eines virtuellen Hintergrunds für eine Aufnahme in einem virtuellen Bildaufnahmestudio wiederzugeben und weist eine Vielzahl von Lichtquellen auf, die Licht in mehreren verschiedenen Emissionsspektren erzeugen. Die Kamera ist dazu ausgebildet, während einer Aufnahme die Darstellung des virtuellen Hintergrunds und das reale Motiv abzubilden, wobei die Kamera einen Bildsensor mit einer Vielzahl von lichtempfindlichen Sensorelementen aufweist, um einfallendes Licht gemäß mehreren verschiedenen Empfindlichkeitsspektren in Bildsignale zu wandeln.

Bei einem solchen Hintergrundwiedergabe- und Aufnahmesystem kann mittels der Hintergrund-Wiedergabeeinrichtung eine Darstellung eines virtuellen Hintergrunds wiedergegeben werden, so dass diese Darstellung des virtuellen Hintergrunds während einer Aufnahme in dem virtuellen Bildaufnahmestudio von der Kamera unmittelbar abgebildet werden kann. Dadurch kann in dem virtuellen Bildaufnahmestudio beispielsweise eine Darstellung einer Landschaft oder eines Raums wiedergegeben werden, um unmittelbar eine Szene aufzunehmen, die in der dargestellten Landschaft oder dem dargestellten Raum stattfindet. Im Unterschied etwa zu einer Greenscreen-Aufnahme kann der virtuelle Hintergrund somit bereits während der Aufnahme sichtbar wiedergegeben und von der Kamera unmittelbar abgebildet werden, ohne erst nachträglich hinzugefügt werden zu müssen.

Beispielsweise kann mittels eines derartigen Hintergrundwiedergabe- und Aufnahmesystems eine Bewegtbildsequenz, etwa für einen Kinofilm, in einem virtuellen Bildaufnahmestudio aufgenommen werden, während mittels der Hintergrund-Wiedergabeeinrichtung eine Darstellung des vorgesehenen Hintergrunds wiedergegeben wird. Dabei können grundsätzlich durch entsprechende Ansteuerung der Lichtquellen auch Bewegungen in dem virtuellen Hintergrund darstellbar sein, so dass ein Schauspieler unmittelbar auf in dem Hintergrund ablaufende Ereignisse reagieren und das Schauspiel darauf anpassen kann.

Darüber hinaus können derartige Hintergrund-Wiedergabeeinrichtungen auch bei Aufnahmen von Stillbildern oder Fotografien in einem virtuellen Bildaufnahmestudio zum Einsatz kommen, wobei insbesondere das Zusammenspiel zwischen sich im Vordergrund befindenden Personen oder Gegenständen und dem virtuellen Hintergrund - wiederum anders als bei einer Greenscreen-Aufnahme - unmittelbar erkennbar ist und in den Abbildungen der Kamera direkt überprüft werden kann. Derartige Hintergrundwiedergabe- und Aufnahmesystems ermöglichen es somit, Aufnahmen in virtuellen Bildaufnahmestudios durchzuführen und dabei jedoch den Eindruck entstehen zu lassen, die Aufnahme erfolge in einer dem virtuellen Hintergrund entsprechenden realen Umgebung.

Jedoch besteht bei solchen Hintergrundwiedergabe- und Aufnahmesystemen ein Problem dahingehend, dass durch das Erzeugen der Darstellung des virtuellen Hintergrunds mittels einer Vielzahl von Lichtquellen mit jeweiligen charakteristischen Emissionsspektren die Darstellung des virtuellen Hintergrunds mit einem künstlichen Emissionsspektrum wiedergegeben wird. Dieses künstliche Emissionsspektrum weicht von einem Lichtspektrum ab, mit welchem ein dem virtuellen Hintergrund entsprechender realer Hintergrund natürliches Licht reflektiert würde und daher wahrgenommen würde. Zwar kann die Ansteuerung der Lichtquellen derart erfolgen, dass ein menschlicher Betrachter die Darstellung des virtuellen Hintergrunds in natürlichen Farben wahrnimmt, also aufgrund der spektralen Empfindlichkeit des menschlichen Auges. Jedoch können in einer von der Kamera erzeugten Abbildung der Darstellung des virtuellen Hintergrunds aufgrund der Überlagerung der Emissionsspektren der Lichtquellen und der hiervon verschiedenen Empfindlichkeitsspektren der lichtempfindlichen Sensorelemente der Kamera Abweichungen zwischen dem tatsächlich von den Lichtquellen emittierten Spektrum und dem Spektrum entstehen, dass von der Kamera registriert und abgebildet wird. Diese Verschiebung kann jedoch zu einem unnatürlichen Eindruck der Abbildung, insbesondere einem unnatürlichen Farbeindruck, führen.

Darüber hinaus können auch die realen Motive, die von der Hintergrund-Wiedergabeeinrichtung während einer Aufnahme beleuchtet werden und das von der Hintergrund-Wiedergabeeinrichtung emittierte Licht reflektieren, aufgrund des von natürlichem Licht abweichenden Emissionsspektrums der Hintergrund-Wiedergabeeinrichtung in der von der Kamera erzeugten Abbildung anders erscheinen als dies bei einer Beleuchtung durch natürliches Licht zu erwarten wäre. Aufnahmen mittels eines solchen Hintergrundwiedergabe- und Aufnahmesystems können daher gegebenenfalls einen unerwünscht unnatürlichen Eindruck erwecken.

Es ist daher eine Aufgabe der Erfindung, eine Möglichkeit zu schaffen, um bei einem Hintergrundwiedergabe- und Aufnahmesystem der vorstehend genannten Art natürlich anmutende Abbildungen der Darstellung des virtuellen Hintergrunds und des realen Motivs zu erreichen.

Diese Aufgabe wird gelöst durch ein Verfahren zum Kalibrieren eines Hintergrundwiedergabeund Aufnahmesystems mit den Merkmalen des Anspruchs 1.

Dieses Verfahren umfasst die folgenden Schritte:
- Wiedergeben zumindest einer Kalibrierdarstellung mittels der Hintergrund-Wiedergabeeinrichtung und Erzeugen einer Abbildung der zumindest einen Kalibrierdarstellung mit der Kamera,
- Bestimmen zumindest einer ersten Transformationsvorschrift anhand der Abbildung der Kalibrierdarstellung, wobei die zumindest eine erste Transformationsvorschrift die Ansteuerung der Hintergrund-Wiedergabeeinrichtung betrifft,
- Bestimmen zumindest einer zweiten Transformationsvorschrift, wobei die zumindest eine zweite Transformationsvorschrift eine Transformation von Kamerabilddaten der Kamera betrifft,
wobei die zumindest eine erste Transformationsvorschrift und die zumindest eine zweite Transformationsvorschrift derart bestimmt werden, dass die Darstellung des virtuellen Hintergrunds von der Kamera wie bei natürlichen Lichtverhältnissen in dem virtuellen Hintergrund erfassbar ist und dass das reale Motiv von der Kamera wie bei natürlichen Lichtverhältnissen in dem virtuellen Bildaufnahmestudio erfassbar ist.

Bei dem Verfahren wird somit eine Kalibrierdarstellung an der Hintergrund-Wiedergabeeinrichtung wiedergegeben und von der Kamera abgebildet, um anhand der Abbildung der Kalibrierdarstellung zumindest eine erste Transformationsvorschrift zu bestimmen, welche die Ansteuerung der Hintergrund-Wiedergabeeinrichtung betrifft. Die erste Transformationsvorschrift kann somit insbesondere dazu ausgelegt sein, bei einer späteren Aufnahme in dem virtuellen Bildaufnahmestudio auf Eingangsbilddaten der Hintergrund-Wiedergabeeinrichtung angewendet zu werden, um die Eingangsbilddaten zu transformieren. Die Kalibrierdarstellung kann insbesondere durch entsprechendes Ansteuern der Lichtquellen wiedergegeben und eigens zur Bestimmung der zumindest einen ersten Transformationsvorschrift wiedergegeben werden. Insbesondere kann die Kalibrierdarstellung daher keine Darstellung eines virtuellen Hintergrunds bilden, die für eine Aufnahme in dem virtuellen Bildaufnahmestudio vorgesehen ist, wobei es grundsätzlich jedoch auch möglich ist, die erste Transformationsvorschrift anhand einer Kalibrierdarstellung zu ermitteln, die auch als Darstellung eines virtuellen Hintergrunds geeignet ist.

Beispielsweise kann die Hintergrund-Wiedergabeeinrichtung eine Steuereinrichtung und einen Bildgenerator umfassen oder mit einem Bildgenerator verbunden sein, welcher die Eingangsbilddaten erzeugt, die während einer Aufnahme die Darstellung des virtuellen Hintergrunds repräsentieren sollen. Ein solcher Bildgenerator kann beispielsweise als eine Game Engine ausgebildet sein oder eine Game Engine umfassen, welche ein Softwaremodul bilden kann, mittels dessen die Darstellung des virtuellen Hintergrunds generiert werden kann. Insbesondere kann eine Game Engine dazu ausgebildet sein, die Darstellung des virtuellen Hintergrunds in Abhängigkeit von einer Position der Kamera zu generieren oder anzupassen, um - ähnlich wie bei Computerspielen in Abhängigkeit von der Position des Spielers - die Darstellung des virtuellen Hintergrunds zu generieren. Hierzu kann die Game Engine beispielsweise auf eine oder mehrere Datenbanken zugreifen, in welchen Modelle, insbesondere dreidimensionale Modelle, des virtuellen Hintergrunds gespeichert sein können. Es kann jedoch auch vorgesehen sein, dass die Eingangsbilddaten beispielsweise als eine Video- oder Fotodatei empfangen und an der Hintergrund-Wiedergabeeinrichtung wiedergegeben werden.

Um die Eingangsbilddaten an der Hintergrund-Wiedergabeeinrichtung wiederzugeben, kann die Hintergrund-Wiedergabeeinrichtung ferner insbesondere eine Steuereinheit umfassen, die auch als Displaycontroller bezeichnet werden kann. Diese Steuereinheit kann dazu ausgebildet sein, die Eingangsbilddaten gemäß einer Displaytransformationsvorschrift und/oder in einen Standardfarbraum zu transformieren, um die durch die Eingangsbilddaten repräsentierte Darstellung des virtuellen Hintergrunds mittels der Lichtquellen wiedergeben zu können.

Wie bereits erläutert, können die Eingangsbilddaten derart in einen Standard-Farbraum transformierbar sein, dass die wiedergegebene Darstellung des virtuellen Hintergrunds auf den menschlichen Betrachter wie ein dem virtuellen Hintergrund entsprechender realer Hintergrund wirkt, wozu beispielsweise eine Transformation auf den Video-Standard REC 709 vorgesehen sein kann. Jedoch kann die Darstellung des virtuellen Hintergrunds aufgrund der lediglich teilweise mit den Emissionsspektren der Hintergrund-Wiedergabeeinrichtung übereinstimmenden Empfindlichkeitsspektren der lichtempfindlichen Sensorelemente der Kamera von der Kamera anders erfasst werden als sie tatsächlich wiedergegeben wird. So können die lichtempfindlichen Sensorelemente, die auch als Pixel des Bildsensors bezeichnet werden können, beispielsweise mit jeweiligen Farbfiltern versehen sein, welche die spektrale Empfindlichkeit der Sensorelemente bestimmen. Durch solche Filter, die beispielsweise gemäß einem aus der Patentschrift US 3971065 A bekannten sogenannten Bayer-Muster angeordnet sein können, können insbesondere jeweilige schmalbandige Empfindlichkeitsspektren für die Sensorelemente festgelegt sein, so dass ein einzelnes Sensorelement für einen schmalbandigen Wellenlängenbereich und eine vorbestimmte Farbe empfindlich sein kann. Beispielsweise können drei, vier oder fünf verschiedene derartige Empfindlichkeitsspektren in dem Bildsensor verwirklicht sein, die insbesondere lediglich in jeweiligen spektralen Randbereichen überlappen. Die Filter können dabei insbesondere derart gewählt und verteilt sein, dass durch die Überlagerung der einzelnen Empfindlichkeitsspektren der Sensorelemente ein insgesamt dem natürlichen Lichtspektrum nachgebildetes Empfindlichkeitsspektrum des Bildsensors resultiert.

Die Kamera kann zudem eine Steuereinheit umfassen, welche dazu ausgebildet ist, von der Kamera erzeugte Bilddaten gemäß einer Kameratransformationsvorschrift zu transformieren, wobei diese Kameratransformationsvorschrift insbesondere vorbestimmt sein kann. Eine solche Kameratransformationsvorschrift kann von einer Aufnahme unter natürlichen Lichtverhältnissen aufgrund weißen Lichts ausgehen. Die Kameratransformationsvorschrift kann also dazu ausgelegt sein, die von der Kamera erzeugten Bilddaten unter Annahme einer spektralen Verteilung des Umgebungslichts transformieren, die über den sichtbaren Wellenlängenbereich durchgehend ist und - im Unterschied zu mehreren nahezu disjunkten Emissionsspektren - insbesondere im Wesentlichen gleichmäßig verteilt sein kann. Indem die Hintergrund-Wiedergabe-einrichtung die Darstellung des virtuellen Hintergrunds jedoch mit einem von natürlichen Lichtverhältnissen abweichenden Emissionsspektrum wiedergibt (insbesondere mit ausgeprägten Maxima und Minima oder sogar Lücken), können in der erzeugten Abbildung, welche durch die Empfindlichkeitsspektren der Sensorelemente und/oder die Kameratransformationsvorschrift bestimmt ist, spektrale Verschiebungen gegenüber dem Emissionsspektrum der Hintergrund-Wiedergabeeinrichtung auftreten. Die spektralen Verschiebungen können insbesondere als Farbverschiebungen erscheinen, die zu einem unnatürlichen Eindruck der Abbildung führen können.

Durch die erste Transformationsvorschrift können die Eingangsbilddaten hingegen derart angepasst werden, dass die Darstellung des virtuellen Hintergrunds von der Kamera wie bei natürlichen Lichtverhältnissen in dem virtuellen Hintergrund erfassbar ist, die von der Kamera erzeugte Abbildung der Darstellung des virtuellen Hintergrunds also wie eine Abbildung eines dem virtuellen Hintergrund entsprechenden realen Hintergrunds wirkt, in welchem natürliche Lichtverhältnisse herrschen. Durch Anwenden der ersten Transformationsvorschrift können die Eingangsbilddaten, welche die Darstellung des virtuellen Hintergrunds repräsentieren, transformiert und die Darstellung somit verändert an der Hintergrund-Wiedergabeeinrichtung wiedergegeben werden. Dies kann zwar zur Folge haben, dass die wiedergegebene Darstellung auf den menschlichen Betrachter unnatürlich wirkt, wohingegen jedoch erreicht werden kann, dass die Darstellung des virtuellen Hintergrunds in der Abbildung natürlich wirkt.

Unter natürlichen Lichtverhältnissen ist im Zusammenhang mit der Erfindung das Ausleuchten mit diffusem weißen Umgebungslicht zu verstehen, wie es beispielsweise bei bewölktem Himmel zur Mittagszeit als Tageslicht vorherrscht.

Um die (zumindest eine) erste Transformationsvorschrift zu bestimmen, wird eine Kalibrierdarstellung, insbesondere eine Darstellung mit definierten Farben oder mit definierter Farbe, an der Hintergrund-Wiedergabeeinrichtung wiedergegeben und mittels der Kamera abgebildet. Daraufhin kann überprüft werden, ob die Abbildung der Kalibrierdarstellung mit der durch entsprechende Eingangsbilddaten repräsentierten Kalibrierdarstellung übereinstimmt, wobei insbesondere überprüft werden kann, ob die Farbe der Kalibrierdarstellung in der Abbildung der Farbe der wiedergegebenen Kalibrierdarstellung entspricht. Sollte bei einem solchen Vergleich eine Abweichung festgestellt werden, kann die erste Transformationsvorschrift derart ermittelt werden, dass, nachdem die erste Transformationsvorschrift auf die Eingangsbilddaten angewandt wurde, die durch die Eingangsbilddaten definierte Farbe tatsächlich in der von der Kamera erzeugten Abbildung erscheint.

Die Hintergrund-Wiedergabeeinrichtung kann insbesondere verschiedene Lichtquellen aufweisen, die dazu ausgebildet sind, Licht mit unterschiedlichen Spektren bzw. in unterschiedlichen Farben zu emittieren, so dass durch Mischen dieser Spektren die Wiedergabe einer jeweiligen Farbe erreicht werden kann. Um die erste Transformationsvorschrift zu ermitteln, können insbesondere auch mehrere Kalibrierdarstellungen wiedergegeben werden, indem zum Erzeugen einer jeweiligen Kalibrierdarstellung die Lichtquellen einer jeweiligen Farbe aktiviert und die anderen Lichtquellen deaktiviert werden. Es kann jedoch auch vorgesehen sein, durch Mischen der verschiedenen Lichtquellen eine bestimmte, jedoch zuvor definierte Farbe als Kalibrierdarstellung wiederzugeben, die dann mittels der Kamera abgebildet werden kann, um die abgebildete Farbe mit der tatsächlich wiedergegebenen Farbe zu vergleichen. Dies kann es insbesondere auch ermöglichen, wellenlängenabhängige oder farbabhängige erste Transformationsvorschriften zu bestimmen.

Indem die (zumindest eine) erste Transformationsvorschrift anhand der von der Kamera erzeugten Abbildung der Kalibrierdarstellung bestimmt wird, kann die Hintergrund-Wiedergabeeinrichtung insbesondere unmittelbar und speziell auf die auch für die spätere Aufnahme in dem virtuellen Bildaufnahmestudio vorgesehene Kamera abgestimmt werden. Insbesondere kann somit eine Kamera-intrinsische und insofern Kamera-spezifische Farbkorrektur bei der Kalibrierung der Hintergrund-Wiedergabeeinrichtung ausgenutzt werden, indem die Kamera hinsichtlich des von der Hintergrund-Wiedergabeeinrichtung emittierten Lichts als Messgerät verwendet und der Kalibrierung insbesondere die speziellen Empfindlichkeitsspektren der lichtempfindlichen Sensorelemente und/oder die bereits erwähnte Kameratransformationsvorschrift zugrunde gelegt werden. Dies kann insbesondere eine automatische Kalibrierung der Hintergrund-Wiedergabeeinrichtung und/oder der Kamera ermöglichen, ohne dass sämtliche Komponenten und insbesondere die Kamera zunächst manuell charakterisiert werden müssen. Vielmehr ist eine exakte Kenntnis der Emissionsspektren der Lichtquellen der Hintergrund-Wiedergabeeinrichtung, der Empfindlichkeitsspektren der Kamera und/oder der Kameratransformationsvorschrift nicht zwangsläufig erforderlich, um die Kalibrierung durchführen und die (zumindest eine) erste Transformationsvorschrift bestimmen zu können.

Zusätzlich zu der (zumindest einen) ersten Transformationsvorschrift wird ferner zumindest eine zweite Transformationsvorschrift bestimmt, die eine Transformation von Kamerabilddaten der Kamera betrifft, d.h. die dazu ausgelegt ist, auf die Kamerabilddaten angewendet zu werden. Durch Anwenden der zweiten Transformationsvorschrift können somit auch die Kamerabilddaten, welche die von der Kamera erzeugte Abbildung repräsentieren, angepasst werden, um die von der Kamera erzeugte Abbildung einer Abbildung unter natürlichen Lichtverhältnissen anzunähern. Die zweite Transformationsvorschrift kann daher dazu ausgelegt sein, auf Kamerabilddaten angewendet zu werden, um die Kamerabilddaten zu transformieren.

Die genannte von der Kamera erzeugte Abbildung kann letztlich in Form eines Bilddatensatzes vorliegen, welcher die Kamerabilddaten umfasst. Die Kamerabilddaten entsprechen den von dem Bildsensor erzeugten Bildsignalen und können beispielsweise jeweilige Farbwerte einzelner Sensorelemente oder Pixel enthalten. Ein solcher Bilddatensatz kann als Stillbilddatensatz oder Bewegtbilddatensatz generiert werden, um eine Stillbildaufnahme oder eine Aufnahme einer Bewegtbildsequenz bzw. die darin enthaltene Bildinformation (einschließlich jeweiliger Farbwerte) zu repräsentieren.

Indem die zweite Transformationsvorschrift auf die Kamerabilddaten angewandt werden kann, kann die bereits erwähnte Kameratransformationsvorschrift angepasst werden. Hierdurch kann berücksichtigt werden, dass eine Aufnahme in dem virtuellen Bildaufnahmestudio erfolgt und dort Abweichungen des von der Hintergrund-Wiedergabeeinrichtung emittierten Lichts (insbesondere dessen spektraler Verteilung) von natürlichem Licht auftreten. Somit wird hinsichtlich des von der Hintergrund-Wiedergabeeinrichtung erzeugten Umgebungslichts eine kameraseitige (d.h. auf die Kamerabilddaten angewandte Korrektur) ermöglicht. Insbesondere können hierdurch in den Kamerabilddaten im Vergleich zu einer Beleuchtung mit natürlichem Licht veränderte Reflexionen von realen Motiven, die von der Hintergrund-Wiedergabeeinrichtung beleuchtet werden, ausgeglichen werden, so dass diese realen Motive in der von der Kamera erzeugten Abbildung wie bei einer Aufnahme unter natürlichen Lichtverhältnissen erscheinen. Während sowohl die Kameratransformationsvorschrift als auch die zumindest eine zweite Transformationsvorschrift grundsätzlich von einer in die Kamera integrierten Steuereinheit vorgenommen werden können, ist es auch möglich, dass die Kameratransformationsvorschrift und/oder die zweite Transformationsvorschrift erst nachgelagert während einer Postproduktion angewandt wird. Insofern können die Kamerabilddaten von der Kamera grundsätzlich auch unverändert an eine externe Steuereinheit übermittelt werden, welche dazu ausgebildet ist, die Kamerabilddaten gemäß der zweiten Transformationsvorschrift zu transformieren.

Die (zumindest eine) erste Transformationsvorschrift kann somit insbesondere die Darstellung des virtuellen Hintergrunds betreffen, die durch Anwenden der ersten Transformationsvorschrift derart angepasst werden kann, dass deren Abbildung durch die Kamera wie eine Abbildung eines dem virtuellen Hintergrund entsprechenden realen Hintergrunds unter natürlichen Lichtverhältnissen erscheint. Hingegen kann die (zumindest eine) zweite Transformationsvorschrift insbesondere darauf gerichtet sein, die Kamerabilddaten derart anzupassen, dass abgebildete Reflexionen des von der Hintergrund-Wiedergabeeinrichtung emittierten Lichts durch reale Motive derart angepasst werden, dass sie der Abbildung einer Reflexion natürlichen Lichts angenähert werden. Durch das Anwenden der ersten Transformationsvorschrift und der zweiten Transformationsvorschrift kann somit die Darstellung des virtuellen Hintergrunds von der Kamera erfasst werden, als würden natürliche Lichtverhältnisse in dem virtuellen Hintergrund herrschen, und gleichzeitig kann das reale Motiv von der Kamera erfasst werden, als würden in dem virtuellen Bildaufnahmestudio natürliche Lichtverhältnisse herrschen.

Dabei können die jeweiligen Transformationsvorschriften bei einigen Ausführungsformen beispielsweise auf jeweilige Bildbereiche in der von der Kamera erzeugten Abbildung angewandt werden, wie nachstehend noch näher erläutert ist. Es ist jedoch bei einigen Ausführungsformen auch möglich, dass die erste Transformationsvorschrift und die zweite Transformationsvorschrift derart aufeinander abgestimmt werden, dass bei Anwenden der ersten Transformationsvorschrift auf die gesamte Darstellung des virtuellen Hintergrunds und bei Anwenden der zweiten Transformationsvorschrift auf die gesamten Kamerabilddaten die in dem virtuellen Bildaufnahmestudio aufgenommene Szene wie unter natürlichen Lichtverhältnissen mittels der Kamera erfassbar ist. Eine derartige gegenseitige Abstimmung kann beispielsweise auch iterativ erfolgen, um zu berücksichtigen, dass ein Anwenden der ersten Transformationsvorschrift das Ergebnis eines Anwendens der zweiten Transformationsvorschrift beeinflussen kann, und umgekehrt. Auch dies ist nachstehend näher erläutert.

Somit kann durch das Kalibrierverfahren eine Abstimmung zwischen der Kamera und der Hintergrund-Wiedergabeeinrichtung vorgenommen werden, damit in einer nachfolgenden Aufnahme sowohl für die Darstellung des virtuellen Hintergrunds als auch für das reale Motiv in dem virtuellen Bildaufnahmestudio - jeweils bezogen auf die Erfassung durch die Kamera - natürliche Lichtverhältnissen nachgebildet werden. Diese Abstimmung kann insbesondere spezifisch für die verwendete Kamera bzw. für die spektralen Eigenschaften des Bildsensors erfolgen, da auch die Überlagerung der Emissionsspektren der Hintergrund-Wiedergabeeinrichtung und der Empfindlichkeitsspektren der lichtempfindlichen Sensorelemente der Kamera letztlich durch die Kamera bestimmt sein kann. Es kann somit vorgesehen sein, vor einer Aufnahme in dem virtuellen Bildaufnahmestudio das Kalibrierverfahren durchzuführen, um die Hintergrund-Wiedergabeeinrichtung und die Kamera aufeinander abzustimmen. Sofern während einer Aufnahme verschiedene Kameras, insbesondere nacheinander, zum Einsatz kommen, kann das Hintergrundwiedergabe- und Aufnahmesystem für jede der Kameras separat kalibriert werden. Hierbei können jedoch die jeweiligen Transformationsvorschriften für einen Kameratyp oder eine Kamera gegebenenfalls in einem Speicher hinterlegt werden, um bei folgenden Aufnahmen unmittelbar auf die Transformationsvorschriften zurückgreifen zu können.

Weitere Ausführungsformen sind den abhängigen Ansprüchen, der Beschreibung und den Figu-ren zu entnehmen.

Die erste Transformationsvorschrift und die zweite Transformationsvorschrift können bei einigen Ausführungsformen auf eine jeweilige Farbtransformation gerichtet sein. Dies wird nachstehend noch näher erläutert.

Bei einigen Ausführungsformen kann die zumindest eine erste Transformationsvorschrift eine Farbtransformation von mittels der Hintergrund-Wiedergabeeinrichtung wiedergegebenen Farben betreffen. Wie bereits erläutert, können von der Hintergrund-Wiedergabeeinrichtung empfangene und/oder erzeugte Eingangsbilddaten, welche die Darstellung des virtuellen Hintergrunds repräsentieren, mittels der ersten Transformationsvorschrift insbesondere derart angepasst werden, dass die Darstellung in der von der Kamera erzeugten Abbildung natürlich erscheint. Beispielsweise kann, wenn durch das Abbilden der Kalibrierdarstellung festgestellt wird, dass bei einer bestimmten Farbe aufgrund der Überlagerung der Emissionsspektren der Lichtquellen und der Empfindlichkeitsspektren der lichtempfindlichen Sensorelemente der Kamera in der Abbildung eine Verlagerung zu größeren Wellenlängen erfolgt, die zumindest eine erste Transformationsvorschrift derart bestimmt werden, dass diese Farbe an der Hintergrund-Wiedergabeeinrichtung gezielt zu kürzeren Wellenlängen verschoben wiedergegeben wird, um in der Abbildung letztlich die gewünschte Farbe zu erzeugen. Durch Anwenden der zumindest einen ersten Transformationsvorschrift kann die Darstellung des virtuellen Hintergrunds somit derart verändert wiedergegeben werden, dass die vorgesehenen Farben erst in der Abbildung der Kamera sichtbar werden.

Eine solche Farbtransformation kann beispielsweise erfolgen, indem jeweilige RGB (Rot-Grün-Blau) Werte, die eine bestimmte an der Hintergrund-Wiedergabeeinrichtung wiederzugebende Farbe definieren, individuell verschoben werden, so dass die jeweilige Farbe durch eine veränderte Mischung roten, grünen und blauen Lichts definiert werden kann. Dies kann insbesondere bei Ausführungsformen vorgesehen sein, bei welchen die Lichtquellen der Hintergrund-Wiedergabeeinrichtung in Gruppen von Lichtquellen angeordnet sind, wobei jede der Gruppen eine jeweilige rotes Licht emittierende Lichtquelle, eine jeweilige grünes Licht emittierende Lichtquelle und eine jeweilige blaues Licht emittierende Lichtquelle sowie einen Farbmischer aufweist, um durch entsprechende Einstellung der Intensitäten der einzelnen Lichtquellen die Farbe des von der Gruppe von Lichtquellen emittierten Lichts festlegen zu können. Die erste Transformationsvorschrift kann insofern insbesondere eine Anpassung oder Veränderung der jeweiligen Intensitäten der Lichtquellen beschreiben, die einer bestimmten an der Hintergrund-Wiedergabeeinrichtung wiederzugebenden Farbe zugeordnet sind.

Die Kalibrierdarstellung kann bei einigen Ausführungsformen einfarbig oder mehrfarbig sein. Bei einer einfarbigen Kalibrierdarstellung kann insbesondere eine vorgegebene Farbe wiedergegeben werden, um zu vergleichen, wie diese Farbe mittels der zugeordneten Kamera abgebildet wird. Anhand einer möglichen Abweichung kann sodann die zumindest eine erste Transformationsvorschrift bestimmt werden. Bei mehrfarbigen Kalibrierdarstellungen können insbesondere verschiedenen Bereichen der Kalibrierdarstellung definierte Farben zugewiesen sein, so dass die entsprechenden Bereiche in der Abbildung mit der wiedergegebenen Darstellung verglichen werden können.

Zum Bestimmen der zumindest einen ersten Transformationsvorschrift können bei einigen Ausführungsformen eine erste Kalibrierdarstellung, eine zweite Kalibrierdarstellung, eine dritte Kalibrierdarstellung und eine vierte Kalibrierdarstellung wiedergegeben und abgebildet werden, wobei sich die Farben der Kalibrierdarstellungen voneinander unterscheiden können. Die zumindest eine erste Transformationsvorschrift kann sodann anhand der Abbildungen der Kalibrierdarstellungen bestimmt werden. Insbesondere können die jeweiligen Kalibrierdarstellungen einfarbig sein, wobei sich die Farben der Kalibrierdarstellungen voneinander unterscheiden können. Grundsätzlich können auch mehr als vier Kalibrierdarstellungen wiedergegeben und abgebildet werden, um die zumindest eine erste Transformationsvorschrift zu bestimmen.

Bei einigen Ausführungsformen kann die erste Kalibrierdarstellung rot, die zweite Kalibrierdarstellung grün, die dritte Kalibrierdarstellung blau und die vierte Kalibrierdarstellung weiß sein. Insbesondere kann die Hintergrund-Wiedergabeeinrichtung als Lichtquellen eine Vielzahl von Leuchtdioden umfassen, wobei diese Leuchtdioden wiederum in Gruppen von Leuchtdioden unterteilt sein können. Die jeweiligen Gruppen von Leuchtdioden können sich durch ihre Emissionsspektren voneinander unterscheiden, wobei beispielsweise eine Gruppe von Leuchtdioden rotes Licht, eine Gruppe von Leuchtdioden grünes Licht und eine Gruppe von Leuchtdioden blaues Licht emittieren kann. Durch entsprechendes Ansteuern der Leuchtdioden können schließlich verschiedene Farben gemischt und dadurch die Darstellung des virtuellen Hintergrunds erzeugt werden.

Um die erste Transformationsvorschrift zu bestimmen, können beispielsweise zum Erzeugen einer ersten Kalibrierdarstellung sämtliche rotes Licht emittierende Leuchtdioden aktiviert werden, während die anderen Leuchtdioden deaktiviert werden. Eine zweite Kalibrierdarstellung kann mit aktivierten grünes Licht emittierenden Leuchtdioden und eine dritte Kalibrierdarstellung mit aktivierten blaues Licht emittierenden Leuchtdioden generiert werden. Anhand dieser Kalibrierdarstellungen kann sodann durch einen Vergleich der durch die Emissionsspektren der Leuchtdioden definierten Farben mit den von der Kamera erfassten oder abgebildeten Farben die erste Transformationsvorschrift, insbesondere auch wellenlängenabhängig, ermittelt werden. Um zudem zu überprüfen, wie von der Hintergrund-Wiedergabeeinrichtung emittiertes Licht, welches natürliches weißes Licht nachbildet, von der Kamera abgebildet wird, kann durch entsprechendes Ansteuern der Lichtquellen oder Leuchtdioden eine weiße Kalibrierdarstellung erzeugt und abgebildet werden. Auch diese Abbildung kann zum Bestimmen der zumindest einen ersten Transformationsvorschrift herangezogen werden.

Bei einigen Ausführungsformen können zum Bestimmen der zumindest einen ersten Transformationsvorschrift Farbwerte in der Abbildung der Kalibrierdarstellung mit Farbwerten der wiedergegebenen Kalibrierdarstellung verglichen werden. Es kann also insbesondere überprüft werden, ob ein an der Hintergrund-Wiedergabeeinrichtung eingestellter bzw. durch Eingangsbilddaten repräsentierter Farbwert von der Kamera entsprechend abgebildet wird.

Bei einigen Ausführungsformen kann die erste Transformationsvorschrift durch Wiedergeben einer Kalibrierdarstellung unter Anwendung der ersten Transformationsvorschrift überprüft werden. Bei solchen Ausführungsformen kann somit die erste Transformationsvorschrift ermittelt werden, wobei daraufhin dieselben Eingangsbilddaten erneut, jedoch unter Anwendung der bestimmten ersten Transformationsvorschrift an der Hintergrund-Wiedergabeeinrichtung wiedergegeben werden können. Diese gewissermaßen transformierte Kalibrierdarstellung kann mittels der Kamera abgebildet werden, wobei in der Abbildung der Kamera überprüft werden kann, ob die den Eingangsbilddaten entsprechende Kalibrierdarstellung - also die Kalibrierdarstellung ohne Anwendung der ersten Transformationsvorschrift - nunmehr mittels der Kamera erfassbar ist. Sofern trotz Anwendung der zumindest einen ersten Transformationsvorschrift auf die Eingangsbilddaten noch Abweichungen zwischen der Abbildung und der durch die Eingangsbilddaten definierten Kalibrierdarstellung bestehen, kann die erste Transformationsvorschrift angepasst werden und es kann gegebenenfalls eine erneute Überprüfung unter Anwendung dieser angepassten ersten Transformationsvorschrift erfolgen.

Bei einigen Ausführungsformen kann eine Information über die zumindest eine Kalibrierdarstellung von der Kamera an die Hintergrund-Wiedergabeeinrichtung übermittelt werden und die Kalibrierdarstellung kann in Abhängigkeit von der Information wiedergegeben werden.

Bei solchen Ausführungsformen kann die Kamera dazu ausgebildet sein, an der Hintergrund-Wiedergabeeinrichtung die Wiedergabe einer Kalibrierdarstellung anzufordern, um deren Abbildung sodann mit der angeforderten Kalibrierdarstellung vergleichen zu können. Beispielsweise kann die Kamera dazu ausgebildet sein, die Eingangsbilddaten an die Hintergrund-Wiedergabeeinrichtung zu übermitteln, welche die Kalibrierdarstellung repräsentieren. Alternativ dazu kann die Kamera jedoch auch einen bestimmten Farbwert an die Hintergrund-Wiedergabeeinrichtung übermitteln, um diese dazu zu veranlassen, eine Kalibrierdarstellung mit dem jeweiligen Farbwert wiederzugeben. Die angeforderte Kalibriedarstellung kann daraufhin von der Kamera abgebildet und die zumindest eine erste Transformationsvorschrift bestimmt werden. Gegebenenfalls kann die Kamera die Wiedergabe der Kalibrierdarstellung oder eines bestimmten Farbwerts erneut anfordern, wobei in diesem Schritt die bereits bestimmte erste Transformationsvorschrift auf die Eingangsbilddaten angewandt werden kann, um zu überprüfen, ob die abgebildete Kalibrierdarstellung bei Anwendung der zumindest einen ersten Transformationsvorschrift der angeforderten Kalibrierdarstellung entspricht. Die zumindest eine erste Transformationsvorschrift kann demnach insbesondere von einer Steuereinheit und/oder Bildauswerteeinheit der Kamera bestimmt und an eine Steuereinheit der Hintergrund-Wiedergabeeinrichtung übermittelt werden.

Die zumindest eine zweite Transformationsvorschrift kann bei einigen Ausführungsformen eine Farbtransformation der Kamerabilddaten betreffen. Insbesondere können Kamerabilddaten, welche das abgebildete reale Motiv repräsentieren, mittels der zumindest einen zweiten Transformationsvorschrift derart angepasst werden, dass von einer Beleuchtung durch natürliches Licht abweichende Reflexionen aufgrund der Beleuchtung durch die Hintergrund-Wiedergabeeinrichtung und damit einhergehende Farbverschiebungen ausgeglichen werden können. Es kann jedoch auch vorgesehen sein, sämtliche Kamerabilddaten, also auch Kamerabilddaten, welche die Darstellung des virtuellen Hintergrunds betreffen, durch die zumindest eine zweiten Transformationsvorschrift zu transformieren.

Um eine solche Farbtransformation durchzuführen, kann es insbesondere vorgesehen sein, jeweilige Werte der Kamerabilddaten in einem RGB (Rot-Grün-Blau) Farbraum ineinander zu verschieben, wozu die zweite Transformationsvorschrift insbesondere eine 3x3 Matrix umfassen oder durch eine 3x3 Matrix definiert sein kann. Die zweite Transformationsvorschrift kann ferner insbesondere eine oder mehrere 3x3 Matrizen-Transformationen umfassen, um eine entsprechende Farbverschiebung in den Kamerabilddaten erreichen zu können.

Die zumindest eine zweite Transformationsvorschrift kann bei einigen Ausführungsformen berechnet und/oder in einer Nachschlagetabelle nachgeschlagen werden. Insbesondere kann die zumindest eine zweite Transformationsvorschrift in Abhängigkeit von der zumindest einen ersten Transformationsvorschrift berechnet und/oder nachgeschlagen werden.

Die Emissionsspektren der Lichtquellen der Hintergrund-Wiedergabeeinrichtung können grundsätzlich bekannt sein, so dass auch das Emissionsspektrum der Hintergrund-Wiedergabeeinrichtung nach Anwenden der zumindest einen ersten Transformationsvorschrift bekannt oder ermittelbar sein kann. Hierdurch können beispielsweise auch die Spektren von Reflexionen durch reale Motive, die vor oder unter der Hintergrund-Wiedergabeeinrichtung positioniert und von dieser beleuchtet werden, errechnet oder nachgeschlagen werden. Dies ermöglicht es, anhand der bekannten Emissionsspektren der Lichtquellen und der zumindest einen ersten Transformationsvorschrift unmittelbar eine zweite Transformationsvorschrift zu bestimmen, um die Kamerabilddaten derart zu transformieren, dass insbesondere das während einer späteren Aufnahme abgebildete reale Motiv wie bei einer Aufnahme unter natürlichen Lichtverhältnissen in dem virtuellen Bildaufnahmestudio erscheint.

Bei einigen Ausführungsformen kann das Bestimmen der zumindest einen zweiten Transformationsvorschrift folgende Schritte umfassen:
- Beleuchten eines realen Kalibrierobjekts durch die Hintergrund-Wiedergabeeinrichtung und Erzeugen einer Abbildung des beleuchteten Kalibrierobjekts mit der Kamera und
- Bestimmen der zumindest einen zweiten Transformationsvorschrift anhand der Abbildung des Kalibrierobjekts.

Indem ein reales Kalibrierobjekt durch die Hintergrund-Wiedergabeeinrichtung beleuchtet und daraufhin mit der Kamera abgebildet werden kann, kann das abgebildete Kalibrierobjekt mit dem Kalibrierobjekt selbst verglichen werden, um anhand dieses Vergleichs die zumindest eine zweite Transformationsvorschrift zu bestimmen. Insbesondere können reale Farben des Kalibrierobjekts, welche durch die Reflexion natürlichen Lichts von dem Kalibrierobjekt definiert sein können, mit den Farben des Kalibrierobjekts in der von der Kamera erzeugten Abbildung verglichen werden. Werden bei einem solchen Vergleich Abweichungen festgestellt, kann die zumindest eine zweite Transformationsvorschrift derart bestimmt werden, dass diese Abweichungen durch Anwenden der zumindest einen zweiten Transformationsvorschrift auf die Kamerabilddaten, welche die Abbildung des Kalibrierobjekts repräsentieren, ausgeglichen werden. Dazu kann die Farbe des Kalibrierobjekts insbesondere bekannt oder vorgegeben sein, so dass ein Farbwert in der Abbildung des Kalibrierobjekts mit dem erwarteten Farbwert verglichen werden kann.

Bei einigen Ausführungsformen kann zum Bestimmen der zumindest einen zweiten Transformationsvorschrift zumindest eine Farbe des Kalibrierobjekts in der Abbildung mit der Farbe des realen Kalibrierobjekts verglichen werden. Das Kalibrierobjekt kann dazu einfarbig oder mehrfarbig sein, wobei bei einer mehrfarbigen Ausbildung des Kalibrierobjekts insbesondere verschiedene Bereiche in der Abbildung mit den entsprechenden Bereichen des Kalibrierobjekts verglichen werden können.

Die zumindest eine zweite Transformationsvorschrift kann bei einigen Ausführungsformen derart bestimmt werden, dass die Farbe in der Abbildung der realen Farbe angenähert wird. Dazu können insbesondere jeweilige Farbwerte des realen Kalibrierobjekts und des abgebildeten Kalibrierobjekts miteinander verglichen werden, um die von der Kamera erzeugten Kamerabilddaten entsprechend mittels der zweiten Transformationsvorschrift anpassen zu können.

Das Kalibrierobjekt kann bei einigen Ausführungsformen eine Farbtafel sein, auf welcher mehrere definierte Farben wiedergegeben sind, wobei zum Bestimmen der zumindest einen zweiten Transformationsvorschrift die Farben in der Abbildung mit den Farben auf der Farbtafel verglichen werden können.

Insbesondere durch Abbilden einer solchen Farbtafel, jedoch auch grundsätzlich durch Abbilden des Kalibrierobjekts, kann ein Farbwiedergabeindex bestimmt werden. Dazu können auf einer Farbtafel beispielsweise die gemäß DIN 6169 definierten vierzehn Testfarben oder jedenfalls die herkömmlicherweise zur Berechnung des Farbwiedergabeindexes herangezogenen ersten acht Testfarben nach DIN 6169 wiedergegeben werden. Die zumindest eine zweite Transformationsvorschrift kann dabei beispielsweise derart bestimmt werden, dass ein möglichst hoher Farbwiedergabeindex oder ein Farbwiedergabeindex möglichst nahe an 100 erreicht wird. Ferner kann die zweite Transformationsvorschrift als diejenige Transformationsvorschrift bestimmt werden, bei welcher der Farbwiedergabeindex optimiert ist. Alternativ oder zusätzlich zu einer Berücksichtigung des Farbwiedergabeindexes können auch ein oder mehrere Farbabstände, die auch als Delta E (ΔE) bezeichnet werden können, zwischen Farben des Kalibrierobjekts und den Farben in der von der Kamera erzeugten Abbildung ermittelt werden, um die zumindest eine zweite Transformationsvorschrift derart zu bestimmen, dass der Farbabstand oder die Farbabstände minimiert werden.

Um die zumindest eine zweite Transformationsvorschrift zu bestimmen oder festzulegen, kann es beispielsweise vorgesehen sein, einen oder mehrere Farbabstände zu ermitteln und, beispielsweise an einem Display einer Steuereinrichtung, auszugeben, so dass ein Benutzer entscheiden kann, ob der erreichte Farbabstand oder die erreichten Farbabstände akzeptabel sind oder ob die zweite Transformationsvorschrift angepasst werden muss. Die zweite Transformationsvorschrift kann bei einem solchen Vorgehen somit insbesondere so lange angepasst werden, bis der Benutzer die ermittelten Farbabstände als angemessen erachtet. Alternativ zu einer Überprüfung durch den Benutzer kann jedoch auch ein vollständig automatisiertes Ermitteln der zweiten Transformationsvorschrift vorgesehen sein, indem ein randomisierter Algorithmus oder eine künstliche Intelligenz, insbesondere ein Machine-Learning Algorithmus, angewandt werden, um Farbabstände zu minimieren oder den Farbwiedergabeindex zu optimieren. Beispielsweise kann dazu ein bestimmter Farbabstand vorgegeben oder durch einen Benutzer vorgebbar sein und die zweite Transformationsvorschrift kann als eine solche Transformationsvorschrift bestimmt werden, bei welcher der ermittelte Farbabstand den bestimmten Farbabstand unterschreitet, wohingegen andernfalls eine weitere Transformationsvorschrift durch den Algorithmus vorgeschlagen, bei der Beleuchtung des Kalibrierobjekts angewandt und geprüft werden kann. Auch bei einer Überprüfung durch einen Benutzer können die zu überprüfenden Transformationsvorschriften randomisiert und/oder durch Anwenden künstlicher Intelligenz ermittelt werden.

Die Hintergrund-Wiedergabeeinrichtung kann bei einigen Ausführungsformen zum Beleuchten des Kalibrierobjekts unter Anwendung der zumindest einen ersten Transformationsvorschrift angesteuert werden. Bei solchen Ausführungsformen kann folglich die zumindest eine erste Transformationsvorschrift zunächst bestimmt werden, um das Kalibrierobjekt daraufhin beispielsweise mit weißem und natürlichem Licht nachempfundenen Licht zu beleuchten, wobei dieses weiße Licht jedoch bereits gemäß der ersten Transformationsvorschrift angepasst werden kann. Die zumindest eine zweite Transformationsvorschrift kann bei solchen Ausführungsformen folglich bereits unter Bedingungen ermittelt werden, die bei einer tatsächlichen Aufnahme in dem virtuellen Bildaufnahmestudio, bei welchem die zumindest eine erste Transformationsvorschrift auf die Eingangsbilddaten angewandt wird, vorgesehen sind. Dadurch kann überprüft werden, welche Reflexionen des von der Hintergrund-Wiedergabeeinrichtung erzeugten Lichts durch die realen Motive während einer Aufnahme zu erwarten sind.

Die zumindest eine erste Transformationsvorschrift und die zumindest eine zweite Transformationsvorschrift können bei einigen Ausführungsformen derart aufeinander abgestimmt werden, dass sowohl die Darstellung des virtuellen Hintergrunds als auch das reale Motiv von der Kamera wie unter natürlichen Lichtverhältnissen abgebildet werden, wenn die zumindest eine erste Transformationsvorschrift und die zumindest eine zweite Transformationsvorschrift angewandt werden. Durch ein derartiges Abstimmen der ersten Transformationsvorschrift und der zweiten Transformationsvorschrift aufeinander kann somit erreicht werden, dass bei Anwenden der zumindest einen ersten Transformationsvorschrift auf sämtliche Eingangsbilddaten, welche die Darstellung des virtuellen Hintergrunds repräsentieren, und bei Anwenden der zumindest einen zweiten Transformationsvorschrift auf sämtliche Kamerabilddaten, welche die Abbildung der Darstellung des virtuellen Hintergrunds und des realen Motivs repräsentieren, eine Abbildung erreicht wird, die wie eine Abbildung unter natürlichen Lichtverhältnissen wirkt.

Die zumindest eine erste Transformationsvorschrift und die zumindest eine zweite Transformationsvorschrift können bei einigen Ausführungsformen aufeinander abgestimmt werden, indem Abbildungen unter Anwendung der ersten Transformationsvorschrift und der zweiten Transformationsvorschrift erzeugt werden und die erste Transformationsvorschrift und/oder die zweite Transformationsvorschrift iterativ angepasst werden. Beispielsweise kann bei solchen Ausführungsformen zunächst die erste Transformationsvorschrift bestimmt werden, indem zumindest eine Kalibrierdarstellung an der Hintergrund-Wiedergabeeinrichtung wiedergegeben und von der Kamera abgebildet wird. Daraufhin kann beispielsweise unter Anwendung der bestimmten ersten Transformationsvorschrift ein Kalibrierobjekt durch die Hintergrund-Wiedergabeeinrichtung beleuchtet und mit der Kamera abgebildet werden, um die zumindest eine zweite Transformationsvorschrift, welche auf von der Kamera erzeugte Kamerabilddaten angewandt wird, zu ermitteln. Dies kann insbesondere darauf abzielen, die Kamerabilddaten derart anzupassen, dass das Kalibrierobjekt in der Abbildung so erscheint, als wäre es unter natürlichen Lichtverhältnissen abgebildet worden.

Die Kalibrierdarstellung kann in der Folge erneut wiedergegeben werden, wobei auf die Eingangsbilddaten, welche die Kalibrierdarstellung repräsentieren, die erste Transformationsvorschrift angewandt werden kann und die Kamerabilddaten mittels der zweiten Transformationsvorschrift transformiert werden können. Die unter Anwendung beider Transformationsvorschriften erhaltene Abbildung kann mit der durch die Eingangsbilddaten repräsentierten Kalibrierdarstellung - also der Kalibrierdarstellung, auf welche die erste Transformationsvorschrift nicht angewandt wurde - verglichen werden, um zu überprüfen, ob die abgebildete Kalibrierdarstellung trotz der Anwendung der beider Transformationsvorschriften und insbesondere auch der zweiten Transformationsvorschrift der erwarteten Kalibrierdarstellung entspricht. Sofern dabei Abweichungen festgestellt werden, können die erste Transformationsvorschrift und/oder die zweite Transformationsvorschrift angepasst werden. Nach einer Anpassung der ersten Transformationsvorschrift kann beispielsweise erneut das Kalibrierobjekt unter Anwendung der angepassten ersten Transformationsvorschrift beleuchtet und abgebildet werden, wobei die zuvor bestimmte zweite Transformationsvorschrift auf die Kamerabilddaten angewandt werden kann. Sodann kann überprüft werden, ob das Kalibrierobjekt in vorgesehener Weise abgebildet wurde, um gegebenenfalls eine Anpassung der ersten Transformationsvorschrift und/oder der zweiten Transformationsvorschrift vorzunehmen. Dieses Verfahren kann iterativ durchgeführt werden, bis zufriedenstellend aufeinander abgestimmte Transformationsvorschriften ermittelt wurden, die auf die gesamten Eingangsbilddaten und die gesamten Kamerabilddaten angewandt werden können.

Bei einigen Ausführungsformen können mehrere erste Transformationsvorschriften und mehrere zweite Transformationsvorschriften bestimmt werden, wobei ein Paar aus einer ersten Transformationsvorschrift und einer zweiten Transformationsvorschrift aus den mehreren ersten Transformationsvorschriften und den mehreren zweiten Transformationsvorschriften derart ausgewählt werden kann, dass bei Anwendung der ersten Transformationsvorschrift und der zweiten Transformationsvorschrift sowohl die Darstellung des virtuellen Hintergrunds als auch das reale Motiv von der Kamera wie unter natürlichen Lichtverhältnissen abgebildet werden. Die Auswahl kann, wie vorstehend erläutert, iterativ erfolgen, oder es können mehrere potentiell geeignete erste und zweite Transformationsvorschriften ermittelt und aus diesen das Paar ausgewählt werden, bei dessen Anwendung die natürlichste Abbildung erreicht wird. Dies kann gegebenenfalls durch Testen verschiedener Paare erfolgen.

Alternativ zu einer solchen Abstimmung kann es jedoch auch vorgesehen sein, dass die beiden Transformationsvorschriften separat bestimmt werden. Dies kann beispielsweise vorgesehen sein, wenn die zweite Transformationsvorschrift lediglich auf solche Kamerabilddaten angewandt wird, die das reale Motiv repräsentieren. Bei solchen Ausführungsformen kann mittels der ersten Transformationsvorschrift erreicht werden, dass die Darstellung des virtuellen Hintergrunds wie ein dem virtuellen Hintergrund entsprechender realer Hintergrund mit natürlichen Lichtverhältnissen abgebildet wird, wobei durch die gezielte Anwendung der zumindest einen zweiten Transformationsvorschrift auf Kamerabilddaten, die das reale Motiv repräsentieren, dieses derart abgebildet werden kann, als wäre es in dem virtuellen Bildaufnahmestudio von natürlichem Licht beleuchtet. Gleichwohl kann es auch bei einer solchen getrennten Anwendung der zweiten Transformationsvorschrift vorgesehen sein, die Hintergrund-Wiedergabeeinrichtung zur Bestimmung der zweiten Transformationsvorschrift unter Anwendung der ersten Transformationsvorschrift anzusteuern.

Die Hintergrund-Wiedergabeeinrichtung kann bei einigen Ausführungsformen als eine LED-Wand ausgebildet sein und die Vielzahl von Lichtquellen kann eine Vielzahl aktiv leuchtender Leuchtdioden oder Leuchtdiodeneinheiten aufweisen. Die Lichtquellen können insbesondere als jeweilige Leuchtdioden ausgebildet sein, die einzeln ansteuerbar und dazu ausgebildet sein können, Licht mit einem jeweiligen Emissionsspektrum wiederzugeben. Diese Emissionsspektren können sich insbesondere unterscheiden, so dass durch entsprechendes Ansteuern und Mischen der Leuchtdioden verschiedene Farben generiert werden können. Es kann jedoch auch vorgegeben sein, dass die Lichtquellen als Leuchtdiodeneinheiten ausgebildet sind, die mehrere verschiedenfarbige Leuchtdioden und einen Farbmischer umfassen, um durch entsprechende Ansteuerung der Leuchtdioden einer Leuchtdiodeneinheit die Emission eines bestimmten Spektrums bzw. einer bestimmten Farbe an der Leuchtdiodeneinheit einstellen zu können.

Die Hintergrund-Wiedergabeeinrichtung kann sich bei einigen Ausführungsformen in einer vertikalen und/oder horizontalen Ausrichtung erstrecken. Insbesondere kann sich die Hintergrund-Wiedergabeeinrichtung vertikal hinter einem realen Motiv, beispielsweise einem Schauspieler, und/oder horizontal über einem solchen Motiv erstrecken, um beispielsweise über dem realen Motiv eine Decke oder einen Himmel wiedergeben zu können.

Die Hintergrund-Wiedergabeeinrichtung kann dazu ausgebildet sein, die Darstellung des virtuellen Hintergrunds auf einer Breite von zumindest 5 m und einer Höhe von zumindest 2 m wiederzugeben. Ferner kann die Hintergrund-Wiedergabe-einrichtung bei einigen Ausführungsformen zumindest abschnittsweise gekrümmt und/oder gewölbt ausgebildet zu sein. Beispielsweise kann sich die Hintergrund-Wiedergabeeinrichtung in einer vertikalen Ausrichtung hinter einem realen Motiv erstrecken, um durch einen gekrümmten Abschnitt in eine horizontale Ausrichtung überzugehen und sich oberhalb des realen Motivs in horizontaler Ausrichtung zu erstrecken.

Bei einigen Ausführungsformen kann in Abhängigkeit von der zumindest einen ersten Transformationsvorschrift und/oder in Abhängigkeit von der zumindest einen zweiten Transformationsvorschrift eine Einstellanweisung für eine zugeordnete Beleuchtungseinrichtung, insbesondere einen Scheinwerfer, ermittelt werden, die zum Erzeugen von Beleuchtungslicht mit einem anpassbaren Emissionsspektrum ausgebildet ist.

Beispielsweise kann eine solche Beleuchtungseinrichtung als eine Studiobeleuchtung vorgesehen sein, um das reale Motiv während einer Aufnahme in dem virtuellen Bildaufnahmestudio zu beleuchten. Dazu können insbesondere ein oder mehrere Scheinwerfer eingesetzt werden, welche dazu ausgebildet sein können, Beleuchtungslicht mit verschiedenen Emissionsspektren oder in verschiedenen Farben zu generieren.

Um eine natürliche Beleuchtung und entsprechend natürlich anmutende Abbildungen zu erreichen, kann die Beleuchtungseinrichtung insbesondere zum Emittieren eines natürlichem Licht nachempfundenen Emissionsspektrums mit einem möglichst hohen Farbwiedergabeindex ausgebildet sein. Während eine solche Beleuchtung grundsätzlich bei einer auf eine Aufnahme unter natürlichen Lichtverhältnissen eingerichteten Kamera und/oder Kameratransformationsvorschrift zu wunschgemäßen Abbildungen führen kann, bei welchen insbesondere auch das von dem realen Motiv reflektierte Licht in der gewünschten Farbe abgebildet wird, kann insbesondere das Anwenden der zweiten Transformationsvorschrift auf die Kamerabilddaten dazu führen, dass das von dem Scheinwerfer emittierte und von dem realen Motiv reflektierte Licht farbverschoben abgebildet wird.

Diesem Problem kann jedoch begegnet werden, indem während oder infolge der Kalibrierung des Hintergrundwiedergabe- und Aufnahmesystems eine Einstellanweisung für die Beleuchtungseinrichtung ermittelt wird, welche die erste Transformationsvorschrift und/oder die zweite Transformationsvorschrift berücksichtigt. Beispielsweise kann eine Einstellanweisung derart ermittelt werden, dass das von der Beleuchtungseinrichtung emittierte Emissionsspektrum dem Emissionsspektrum angenähert wird, welches die Hintergrund-Wiedergabeeinrichtung bei einer Wiedergabe weißen Lichts emittiert, so dass auch die Beleuchtungseinrichtung während der Aufnahme ein Emissionsspektrum erzeugen kann, auf welches die Kamera abgestimmt ist. Die Einstellanweisung kann somit insbesondere das von der Beleuchtungseinrichtung generierte Emissionsspektrum betreffen.

Insbesondere kann die Einstellanweisung unter Berücksichtigung bekannter Emissionsspektren der Beleuchtungseinrichtung ermittelt werden, so dass nicht zwangsläufig eine Messung oder eine Abbildung eines von der Beleuchtungseinrichtung beleuchteten realen Motivs durch die Kamera erfolgen muss. Vielmehr kann die Einstellanweisung in Abhängigkeit von der ersten Transformationsvorschrift und/oder der zweiten Transformationsvorschrift beispielsweise berechnet und/oder in einer Nachschlagetabelle nachgeschlagen werden. So kann beispielsweise anhand der ersten Transformationsvorschrift ermittelt werden, mit welchem Emissionsspektrum weißes Licht an der Hintergrund-Wiedergabeeinrichtung erzeugt wird, um dieses Emissionsspektrum durch eine entsprechende Einstellanweisung an der Beleuchtungseinrichtung nachzubilden. Ferner kann durch die zweite Transformationsvorschrift insbesondere eine Farbverschiebung der Kamerabilddaten bestimmt sein, so dass die zweite Transformationsvorschrift unmittelbar festlegen kann, wie oder mit welcher Farbe von dem realen Motiv reflektiertes Licht abgebildet wird. Die Einstellanweisung kann somit beispielsweise anhand der zweiten Transformationsvorschrift derart bestimmt werden, dass die durch die zweite Transformationsvorschrift bedingte Farbverschiebung des von dem realen Motiv reflektierten Lichts auch bei einer Beleuchtung durch die Beleuchtungseinrichtung zu einem natürlichen Farbeindruck in der Abbildung führt. Es kann jedoch auch vorgesehen sein, ein Kalibrierobjekt nach dem Bestimmen der ersten Transformationsvorschrift und der zweiten Transformationsvorschrift mit der Beleuchtungseinrichtung zu beleuchten und mit der Kamera abzubilden, um eine Einstellanweisung für die Beleuchtungseinrichtung zu ermitteln, bei welcher das abgebildete Kalibrierobjekt wiederum mit den vorgesehenen Farben abgebildet wird.

Die ermittelte Einstellanweisung kann insbesondere gespeichert werden, um bei einer nachfolgenden Aufnahme in dem virtuellen Bildaufnahmestudio verwendet werden zu können. Die Einstellanweisung kann daher bei einigen Ausführungsformen an einen Speicher ausgegeben werden. Ferner kann es vorgesehen sein, die Einstellanweisung unmittelbar an die Beleuchtungseinrichtung auszugeben, um eine entsprechende Ansteuerung vorzunehmen oder während einer darauffolgenden Aufnahme in dem virtuellen Bildaufnahmestudio vornehmen zu können.

Ferner betrifft die Erfindung ein Verfahren zum Aufnehmen einer Darstellung eines virtuellen Hintergrunds und eines realen Motivs in einem virtuellen Bildaufnahmestudio mittels eines Hintergrundwiedergabe- und Aufnahmesystems, bei welchem die Darstellung des virtuellen Hintergrunds hinter und/oder über dem realen Motiv mittels einer Hintergrund-Wiedergabeeinrichtung wiedergegeben und die Darstellung des virtuellen Hintergrunds und das reale Motiv mittels einer Kamera abgebildet werden, wobei das Hintergrundwiedergabe- und Aufnahmesystem gemäß einem Verfahren der hierin offenbarten Art kalibriert ist. Zudem werden die erste Transformationsvorschrift und die zweite Transformationsvorschrift bei dem Aufnehmen der Darstellung des virtuellen Hintergrunds und des realen Motivs angewandt.

Wie bereits erläutert, kann durch Anwenden der ersten Transformationsvorschrift und der zweiten Transformationsvorschrift eine in dem virtuellen Bildaufnahmestudio aufgenommene Szene derart mittels der Kamera abgebildet werden, als würde die Aufnahme unter natürlichen Lichtverhältnissen erfolgen. Die Darstellung des virtuellen Hintergrunds kann somit derart abgebildet werden, als würde ein dem virtuellen Hintergrund entsprechender realer Hintergrund, in welchem natürliche Lichtverhältnisse herrschen, abgebildet. Auch das reale Motiv kann wie bei einer Aufnahme in dem realen Hintergrund oder einer Aufnahme unter natürlichen Lichtverhältnissen abgebildet werden.

Grundsätzlich können die Kamerabilddaten durch Anwenden der zumindest einen zweiten Transformationsvorschrift unmittelbar in der Kamera transformiert werden, oder das Anwenden der zweiten Transformationsvorschrift kann von einem bezüglich der Kamera externen Gerät, insbesondere während der Postproduktion, erfolgen. Das Anwenden der zweiten Transformationsvorschrift bei dem Aufnehmen erfordert somit nicht zwangsläufig, dass die zweite Transformationsvorschrift zeitlich unmittelbar während des Aufnehmens angewandt wird. Es kann jedoch vorgesehen sein, dass die Kamerabilddaten durch Anwenden der zweiten Transformationsvorschrift unmittelbar in der Kamera bearbeitet werden, so dass von der Kamera ausgegebene Bilddaten bereits mittels der zweiten Transformationsvorschrift transformiert worden sein können.

Bei dem Verfahren zum Aufnehmen einer Darstellung eines virtuellen Hintergrunds kann es bei einigen Ausführungsformen vorgesehen sein, dass in dem virtuellen Bildaufnahmestudio zunächst das vorstehend erläuterte Kalibrierverfahren durchgeführt wird, um danach mit der Aufnahme zu beginnen. Es kann jedoch auch vorgesehen sein, dass das Kalibrierverfahren bereits zuvor durchgeführt wurde und in dem virtuellen Bildaufnahmestudio ein bereits kalibriertes Hintergrundwiedergabe- und Aufnahmesystem bereitgestellt wird, so dass unmittelbar mit dem erläuterten Verfahren zum Aufnehmen einer Darstellung eines virtuellen Hintergrunds begonnen werden kann.

Bei einigen Ausführungsformen können an der Hintergrund-Wiedergabeeinrichtung wiederzugebende Eingangsbilddaten mittels der ersten Transformationsvorschrift transformiert und wiedergegeben werden. Die Eingangsbilddaten können somit verändert an der Hintergrund-Wiedergabeeinrichtung wiedergegeben werden, so dass die durch die Eingangsbilddaten repräsentierte Darstellung des virtuellen Hintergrunds erst in der von der Kamera erzeugten Abbildung erscheinen kann.

Die zumindest eine zweite Transformationsvorschrift kann bei einigen Ausführungsformen auf sämtliche von der Kamera erzeugte Bilddaten angewandt werden. Dies kann insbesondere vorgesehen sein, wenn die zumindest eine erste Transformationsvorschrift und die zumindest eine zweite Transformationsvorschrift aufeinander abgestimmt wurden.

Alternativ dazu kann es jedoch bei einigen Ausführungsformen auch vorgesehen sein, dass die zweite Transformationsvorschrift lediglich auf Kamerabilddaten angewandt wird, die das reale Motiv repräsentieren. Bei solchen Ausführungsformen kann die erste Transformationsvorschrift folglich dazu angewandt werden, die Darstellung des virtuellen Hintergrunds derart abzubilden, dass sie wie eine Abbildung eines realen Hintergrunds unter natürlichen Lichtverhältnissen erscheint, wohingegen die zweite Transformationsvorschrift eigens dazu angewandt werden kann, das reale Motiv derart abzubilden, als wäre es während der Aufnahme von natürlichem Licht beleuchtet.

Bei einigen Ausführungsformen können Metadaten erzeugt werden, die einen jeweiligen Bildpunkt in einer von der Kamera erzeugten Abbildung der Darstellung des virtuellen Hintergrunds oder dem realen Motiv zuordnen. Insbesondere kann bei solchen Ausführungsformen anhand der Metadaten entschieden werden, ob die zweite Transformationsvorschrift auf einen jeweiligen Bildpunkt angewandt wird oder nicht, um die zweite Transformationsvorschrift lediglich auf Kamerabilddaten anzuwenden, die das reale Motiv repräsentieren.

Grundsätzlich kann die zweite Transformationsvorschrift bei Ausführungsformen, bei welchen die zweite Transformationsvorschrift lediglich auf Kamerabilddaten angewandt wird, die das reale Motiv repräsentieren, auf sämtliche Kamerabilddaten angewandt werden, die nicht die Darstellung des virtuellen Hintergrunds repräsentieren. Die zweite Transformationsvorschrift kann somit bei solchen Ausführungsformen auf sämtliche abgebildeten Vordergrundobjekte angewandt werden.

Die Darstellung des virtuellen Hintergrunds kann bei einigen Ausführungsformen während der Aufnahme zeitlich variiert werden. Insbesondere können während einer Aufnahme Bewegungen in dem virtuellen Hintergrund dargestellt werden.

Die Darstellung des virtuellen Hintergrunds kann ferner bei einigen Ausführungsformen eine dreidimensionale Szene repräsentieren. Diese dreidimensionale Szene kann insbesondere auf die Hintergrund-Wiedergabeeinrichtung und beispielsweise eine zweidimensionale LED-Wand projiziert werden.

Bei einigen Ausführungsformen kann eine in dem virtuellen Bildaufnahmestudio angeordnete Beleuchtungseinrichtung, insbesondere ein Scheinwerfer, die zum Erzeugen von einem Beleuchtungslicht mit einem anpassbaren Emissionsspektrum ausgebildet ist, in Abhängigkeit von der zumindest einen ersten Transformationsvorschrift und/oder in Abhängigkeit von der zumindest einen zweiten Transformationsvorschrift eingestellt werden. Insbesondere kann das Emissionsspektrum der Beleuchtungseinrichtung und/oder eine Farbe des von der Beleuchtungseinrichtung emittierten Lichts in Abhängigkeit von der zumindest einen ersten Transformationsvorschrift und/oder in Abhängigkeit von der zumindest einen zweiten Transformationsvorschrift eingestellt werden. Beispielsweise kann die Beleuchtungseinrichtung derart eingestellt werden, dass deren Emissionsspektrum dem Emissionsspektrum eines von der Hintergrund-Wiedergabeeinrichtung emittierten weißen Lichts unter Anwendung der ersten Transformationsvorschrift angenähert wird, so dass die auf dieses Emissionsspektrum der Hintergrund-Wiedergabeeinrichtung abgestimmte Kamera auch von der Beleuchtungseinrichtung emittiertes und von dem realen Motiv reflektiertes Licht erwartungsgemäß abbilden kann. Hierzu kann während der Aufnahme insbesondere eine im Zuge der Kalibrierung des Hintergrundwiedergabe- und Aufnahmesystem ermittelte Einstellanweisung für die Beleuchtungseinrichtung umgesetzt werden.

Die Erfindung betrifft ferner ein Hintergrundwiedergabe- und Aufnahmesystem für ein virtuelles Bildaufnahmestudio, welches eine Hintergrund-Wiedergabeeinrichtung und eine Kamera umfasst. Die Hintergrund-Wiedergabeeinrichtung ist dazu ausgebildet, hinter oder über einem realen Motiv eine Darstellung eines virtuellen Hintergrunds für eine Aufnahme in dem virtuellen Bildaufnahmestudio wiederzugeben, und die Kamera ist dazu ausgebildet, die Darstellung des virtuellen Hintergrunds und das reale Motiv abzubilden. Ferner weist das Hintergrundwiedergabe- und Aufnahmesystem eine Steuereinrichtung auf, welche dazu ausgebildet ist, ein Kalibrierverfahren der hierin beschriebenen Art durchzuführen.

Insbesondere kann die Steuereinrichtung des Hintergrundwiedergabe- und Aufnahmesystems jeweilige Komponenten in der Kamera und in oder an der Hintergrund-Wiedergabeeinrichtung aufweisen. Beispielsweise kann die Steuereinrichtung eine in der Kamera angeordnete Bildauswerteeinrichtung umfassen, welche dazu ausgebildet ist, die Abbildung der Kalibrierdarstellung mit der wiedergegebenen Kalibrierdarstellung zu vergleichen, um die zumindest eine erste Transformationsvorschrift zu bestimmen. Ferner kann eine solche Bildauswerteeinrichtung dazu ausgebildet sein, anhand einer Abbildung eines realen Kalibrierobjekts auch die zumindest eine zweite Transformationsvorschrift zu bestimmen. Eine Steuereinheit der Hintergrund-Wiedergabeeinrichtung kann insbesondere dazu ausgebildet sein, die Kalibrierdarstellung in Abhängigkeit von empfangenen oder generierten Eingangsbilddaten wiederzugeben und/oder die erste Transformationsvorschrift auf die Eingangsbilddaten anzuwenden. Es kann jedoch auch vorgesehen sein, dass die Kamera dazu ausgebildet ist, die Abbildung der Kalibrierdarstellung oder diese Abbildung repräsentierende Kamerabilddaten an eine bezüglich der Kamera extern angeordnete Steuereinheit mit einer Bildauswerteeinrichtung zu übermitteln, wobei die entsprechende Bildauswertung von dieser Steuereinrichtung vorgenommen werden kann. Unabhängig von der Anordnung der Bildauswerteeinrichtung kann diese dazu ausgebildet sein, die zumindest eine erste Transformationsvorschrift an eine Steuereinheit der Hintergrund-Wiedergabeeinrichtung zu übermitteln.

Bei einigen Ausführungsformen können die Hintergrund-Wiedergabeeinrichtung und die Kamera eine jeweilige Schnittstelle aufweisen, über welche die Kamera und die Hintergrund-Wiedergabeeinrichtung in Kommunikation zueinander stehen. Die Kamera kann dazu ausgebildet sein, eine Information über die Kalibrierdarstellung an die Hintergrund-Wiedergabeeinrichtung zu übermitteln, wobei die Hintergrund-Wiedergabeeinrichtung dazu ausgebildet sein kann, die Kalibrierdarstellung in Abhängigkeit von der empfangenen Information wiederzugeben.

Bei solchen Ausführungsformen kann die Kamera somit dazu ausgebildet sein, die Wiedergabe einer Kalibrierdarstellung anzufordern, um diese sodann abbilden zu können und eine Bestimmung der zumindest einen ersten Transformationsvorschrift zu ermöglichen. Insofern kann die Kamera das Kalibrierverfahren gewissermaßen steuern oder initiieren und beispielsweise die Wiedergabe verschiedener Farbwerte anfordern, um zu vergleichen, wie diese Farbwerte abgebildet werden. Die Steuereinrichtung des Hintergrundwiedergabe- und Aufnahmesystems, insbesondere eine Bildauswerteeinrichtung der Kamera, kann insbesondere durch einen solchen Vergleich die zumindest eine erste Transformationsvorschrift bestimmen. Die bestimmte zumindest eine erste Transformationsvorschrift kann ferner ebenfalls über die Schnittstellen an eine Steuereinheit der Hintergrund-Wiedergabeeinrichtung übermittelbar sein.

Bei einigen Ausführungsformen kann die Steuereinrichtung, insbesondere die Kamera, eine Bildauswerteeinrichtung umfassen, welche dazu ausgebildet ist, die Abbildung der Kalibrierdarstellung mit der Kalibrierdarstellung zu vergleichen und die erste Transformationsvorschrift zu ermitteln. Wie bereits erläutert, kann dies insbesondere durch einen Vergleich jeweiliger Farbwerte erfolgen.

Die Steuereinrichtung kann bei einigen Ausführungsformen dazu ausgebildet sein, die zweite Transformationsvorschrift zu ermitteln. Dies kann beispielsweise, insbesondere in Kenntnis der ersten Transformationsvorschrift, durch eine Berechnung oder durch ein Nachschlagen in einer Nachschlagetabelle erfolgen. Alternativ dazu kann die Steuereinrichtung jedoch auch dazu ausgebildet sein, die Hintergrund-Wiedergabeeinrichtung zum Beleuchten eines realen Kalibrierobjekts anzusteuern, um die zweite Transformationsvorschrift anhand eines Vergleichs des von der Kamera abgebildeten Kalibrierobjekts mit dem realen Kalibrierobjekt und insbesondere dessen Farbe zu ermitteln. Auch hierbei kann die zweite Transformationsvorschrift beispielsweise durch eine entsprechende Komponente der Steuereinrichtung innerhalb der Kamera oder durch eine bezüglich der Kamera externe Komponente bestimmt werden, an welche die Kamera die Abbildungen des Kalibrierobjekts und/oder entsprechende Kamerabilddaten übermittelt.

Ferner kann die Steuereinrichtung bei einigen Ausführungsformen dazu ausgebildet sein, das vorstehend erläuterte Verfahren zum Aufnehmen einer Darstellung eines virtuellen Hintergrunds und eines realen Motivs in einem virtuellen Bildaufnahmestudio mittels des Hintergrundwiedergabe- und Aufnahmesystems auszuführen.

Die genannte Steuereinrichtung, die genannte Steuereinheit und/oder der genannte Bildgenerator kann/können beispielsweise eine, oder mehrere signaltechnisch miteinander verbundene, der folgenden Vorrichtungen umfassen: eine integrierte Schaltung, eine zentrale Recheneinheit (CPU), einen Microcontroller, ein Field Programmable Gate Array (FPGA) oder ein Application Specific Integrated Circuit (ASIC).

Die Steuereinrichtung kann bei einigen Ausführungsformen dazu ausgebildet sein, in Abhängigkeit von der zumindest einen ersten Transformationsvorschrift und/oder in Abhängigkeit von der zumindest einen zweiten Transformationsvorschrift eine Einstellanweisung für eine zugeordnete Beleuchtungseinrichtung, insbesondere einen Scheinwerfer, welche zum Erzeugen von Beleuchtungslicht mit einem anpassbaren Emissionsspektrum ausgebildet ist, zu ermitteln und auszugeben.. Insbesondere kann das Emissionsspektrum der Beleuchtungseinrichtung durch diese Einstellung an das Emissionsspektrum der Hintergrund-Wiedergabeeinrichtung angepasst werden, wozu während der Aufnahme insbesondere eine während des Kalibrierverfahrens ermittelte Einstellanweisung für die Beleuchtungseinrichtung umgesetzt werden kann. Beispielsweise kann die Steuereinrichtung dazu ausgebildet sein, die während des Kalibrierverfahrens ermittelte Einstellanweisung an einen Speicher auszugeben, so dass während einer nachfolgenden Aufnahme auf die Einstellanweisung zugegriffen und die Beleuchtungseinrichtung entsprechend angesteuert werden kann. Alternativ oder zusätzlich kann die Steuereinrichtung jedoch auch direkt mit der Beleuchtungseinrichtung verbunden sein, um die Beleuchtungseinrichtung gemäß der Einstellanweisung zu einem Erzeugen eines entsprechenden Emissionsspektrums anzusteuern.

Die Erfindung wird im Folgenden rein beispielhaft anhand eines Ausführungsbeispiels unter Bezugnahme auf die Zeichnungen erläutert. Es zeigen:
- Fig. 1: eine schematische Darstellung eines virtuellen Bildaufnahmestudios mit einem Hintergrundwiedergabe- und Aufnahmesystem, welches eine Hintergrund-Wiedergabeeinrichtung und eine Kamera umfasst,
- Fig. 2: eine schematische Darstellung der Kamera,
- Fig. 3A-3D: schematische Darstellungen eines Emissionsspektrums der HintergrundWiedergabeeinrichtung und des mittels der Kamera abgebildeten Spektrums zur Veranschaulichung der Bestimmung einer ersten Transformationsvorschrift, welche zum Annähern der Spektren auf an der Hintergrund-Wiedergabeeinrichtung empfangene Eingangsbilddaten angewandt werden kann, und
- Fig. 4: eine schematische Darstellung der Hintergrund-Wiedergabeeinrichtung während einer Beleuchtung eines realen Kalibrierobjekts, welches von der Kamera abgebildet wird, um eine zweite Transformationsvorschrift zu bestimmen, die auf von der Kamera erzeugte Kamerabilddaten angewandt werden kann.

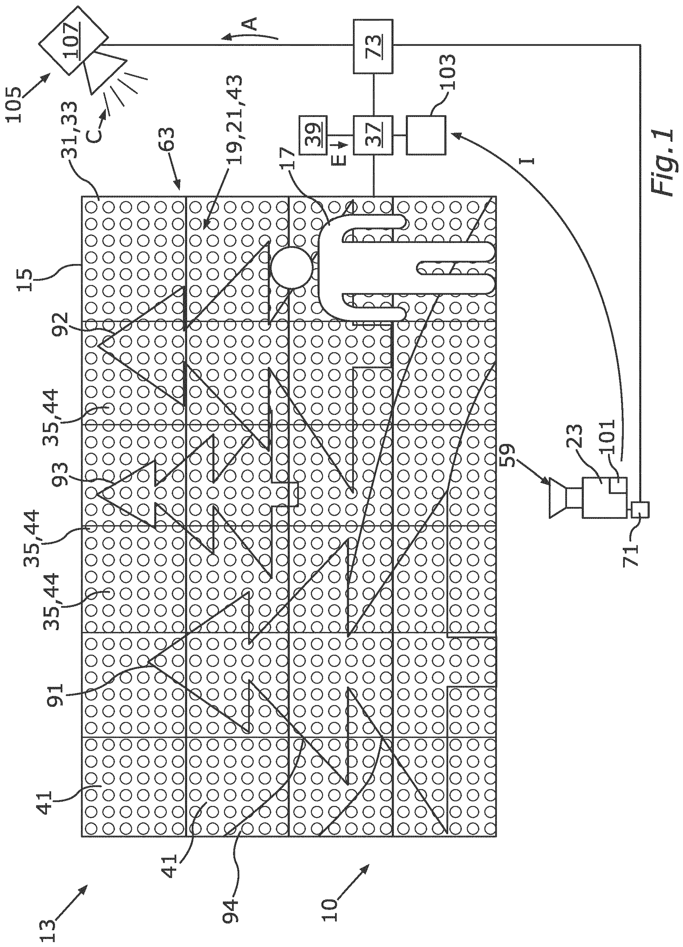

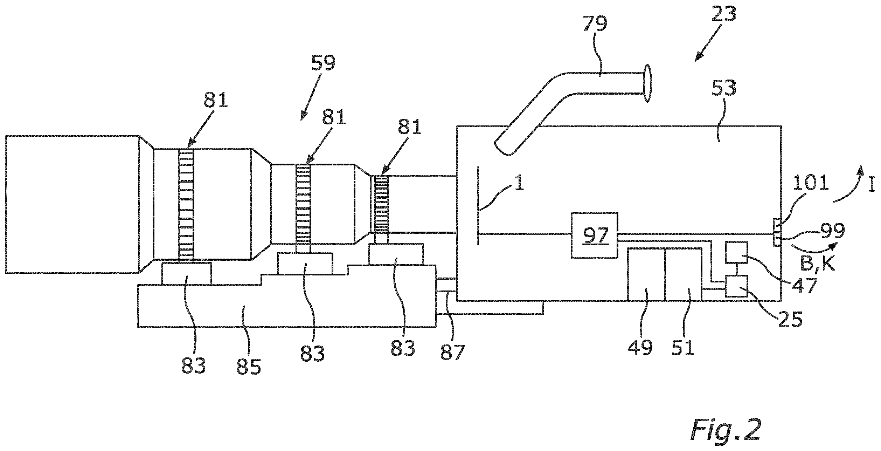

Fig. 1 zeigt schematisch ein virtuelles Bildaufnahmestudio 13, in welchen eine Szene, insbesondere in Form einer Bewegtbildaufnahme und/oder einer Stillbildaufnahme, mittels einer zugeordneten Kamera 23 aufgenommen werden kann. Die Kamera 23 kann beispielsweise als Bewegtbildkamera ausgebildet sein, um Bewegtbildaufnahmen durchführen zu können, die als eine Folge von durch die Kamera 23 erzeugten Abbildungen gespeichert werden können. Dazu weist die Kamera 23 ein Objektiv 59 auf, welches insbesondere als Wechselobjektiv ausgebildet sein kann, das wahlweise mit einem Gehäuse der Kamera 23 verbunden werden kann. Dadurch kann stets ein jeweiliges optimal an die Umgebung in dem Bildaufnahmestudio 13 angepasstes Objektiv 59 genutzt werden, um bestmögliche Aufnahmen erstellen zu können. In dem Gehäuse der Kamera 23 kann insbesondere ein Bildsensor 1 mit mehreren lichtempfindlichen Sensorelementen angeordnet sein, auf welche durch eine Blendenöffnung einer Blende eindringendes Licht mittels eines Linsensystems bzw. zumindest einer Linse zum Erzeugen einer Abbildung geleitet werden kann (vgl. Fig. 2).

Ferner ist in dem Bildaufnahmestudio 13 eine Hintergrund-Wiedergabeeinrichtung 15 angeordnet, welche gemeinsam mit der Kamera 23 ein Hintergrundwiedergabe- und Aufnahmesystem 10 bildet. Die Hintergrund-Wiedergabeeinrichtung 15 umfasst eine als LED-Wand 33 ausgebildete aktive Beleuchtungseinrichtung 31 und ist dazu ausgebildet, eine Darstellung 19 eines virtuellen Hintergrunds 21 für eine Aufnahme mittels der Kamera 23 wiederzugeben. Dazu weist die Beleuchtungseinrichtung 31 bzw. die LED-Wand 33 eine Vielzahl von aktiv leuchtenden Lichtquellen 35 auf, die in einer zweidimensionalen Anordnung nebeneinander angeordnet sind. Beispielsweise können die Lichtquellen 35 als individuell ansteuerbare Leuchtdioden 44 oder als individuell ansteuerbare Leuchtdiodeneinheiten ausgebildet sein, wobei jede einer solchen Leuchtdiodeneinheit mehrere, insbesondere drei, Leuchtdioden 44 umfassen kann. Insbesondere kann es vorgesehen sein, dass die Lichtquelle 35 als Leuchtdiodeneinheiten mit drei jeweiligen Leuchtdioden 44 ausgebildet sind, wobei eine der drei Leuchtdioden 44 rotes Licht, eine Leuchtdiode 44 grünes Licht und ein Leuchtdiode 44 blaues Licht emittieren kann. Die Leuchtdiodeneinheit kann zudem einen Farbmischer umfassen, um durch jeweiliges individuelles Ansteuern der Leuchtdioden 44 einer Leuchtdiodeneinheit eine jeweilige von der Lichtquelle 35 emittierte Farbe und/oder Helligkeit einstellen zu können. Die Leuchtdioden 44 können beispielsweise als LED oder als organische Leuchtdioden 44 bzw. OLED ausgebildet sein. Grundsätzlich können auch Hintergrund-Wiedergabeeinrichtungen zur Wiedergabe einer Darstellung eines virtuellen Hintergrunds in dem Bildaufnahmestudio 13 zum Einsatz kommen, welche die Darstellung mittels einer Rückprojektion erzeugen.

Ferner umfasst die Hintergrund-Wiedergabeeinrichtung 15 eine Vielzahl von Paneelen 41, welche auch als Panels bezeichnet werden können. An jedem Paneel 41 der Vielzahl von Paneelen 41 ist eine jeweilige Vielzahl der aktiv leuchtenden Lichtquellen 35 angeordnet, so dass an jedem der Paneele 41 ein Abschnitt der Darstellung 19 des virtuellen Hintergrunds 21 wiedergegeben werden kann. Die Paneele 41 sind insbesondere rechteckig und/oder quadratisch sowie randlos ausgebildet, so dass die Darstellung 19 des virtuellen Hintergrunds 21 auch an den Übergängen zwischen Paneelen 41 ohne sichtbare Unterbrechungen wiedergegeben werden kann. Die Paneele 41 sind ferner in einer zweidimensionalen Matrix angeordnet, um die Hintergrund-Wiedergabeeinrichtung 15 zu bilden. Insofern umfasst die aktive Beleuchtungseinrichtung 31 bei der gezeigten Ausführungsform mehrere Paneele 41.

Die Darstellung 19 des virtuellen Hintergrunds 21 spiegelt hier beispielhaft eine dreidimensionale Szene 43 mit Objekten 91, 92, 93 und 94, drei Bäumen und einem Weg, wider, die durch geeignetes Ansteuern der Lichtquellen 35, insbesondere geeignetes Einstellen deren jeweiliger Farbe und Helligkeit, erzeugt werden kann. Die dreidimensionale Szene 43 ist dabei auf die im Wesentlichen zweidimensionale Anordnung der Lichtquellen 35 der Beleuchtungseinrichtung 31 projiziert, wobei insbesondere die Objekte 91, 92 und 93 in einem unterschiedlichen Abstand zu der Beleuchtungseinrichtung 31 bzw. der Hintergrund-Wiedergabeeinrichtung 15 erscheinen, um die Dreidimensionalität eines dem virtuellen Hintergrund 21 entsprechenden realen Hintergrunds nachzubilden.

Insbesondere dient die Darstellung 19 des virtuellen Hintergrunds 21 mittels der Hintergrund-Wiedergabeeinrichtung 15 dazu, einen Hintergrund für eine Aufnahme eines realen Motivs 17, beispielsweise eines Schauspielers, zu erzeugen, vor welchem eine Aufnahme erfolgen bzw. eine Filmszene gespielt werden kann. Dadurch können in dem Bildaufnahmestudio 13 grundsätzlich beliebige Landschaften, Räume oder Umgebungen geschaffen werden, vor bzw. in welchen eine Szene beispielsweise für einen Kinofilm gedreht werden soll. Zudem ist es möglich, durch eine sich zeitlich verändernde Ansteuerung der Lichtquellen 35 Bewegungen in dem virtuellem Hintergrund 21, zum Beispiel ein vorbeifahrendes Auto, darzustellen, auf welche der Schauspieler 17 im Vergleich zu einem Schauspiel vor einem Greenscreen vereinfacht und verbessert reagieren kann.

Die Hintergrund-Wiedergabeeinrichtung 15 erstreckt sich hier im Wesentlichen in der Vertikalen, so dass sich der Schauspieler 17 vor dem virtuellen Hintergrund 21 bewegen kann. Um den virtuellen Hintergrund 21 jedoch umfänglicher darstellen zu können, kann sich die Hintergrund-Wiedergabeeinrichtung 15 auch um den Schauspieler 17 herum oder oberhalb von diesem erstrecken, wobei die Hintergrund-Wiedergabeeinrichtung 15 über dem Schauspieler 17 insbesondere eine horizontale Ausrichtung aufweisen kann. Um den Schauspieler 17 umgeben oder einen Übergang von der gezeigten vertikalen Ausrichtung zu einer horizontalen Ausrichtung erzeugen zu können, kann die Hintergrund-Wiedergabeeinrichtung 15 bzw. die Beleuchtungseinrichtung 31 oder die LED-Wand 33 zumindest abschnittsweise auch gewölbt bzw. gekrümmt sein.

Zusätzlich zu dem Darstellen des virtuellen Hintergrunds 21 kann die Hintergrund-Wiedergabeeinrichtung 15 auch dazu dienen, das reale Motiv 17 zu beleuchten und dadurch beispielsweise eine Beleuchtungseinrichtung 105 mit einem Scheinwerfer 107 unterstützen, die als weitere Studiobeleuchtung des Bildaufnahmestudios 13 und zum Erzeugen eines Beleuchtungslichts C vorgesehen ist. Durch ein Beleuchten des realen Motivs 17 mittels der Hintergrund-Wiedergabeeinrichtung 15 kann insbesondere die Wechselwirkung des realen Motivs 17 bzw. des Schauspielers 17 mit in dem virtuellen Hintergrund 21 vorhandenen Lichtquellen, beispielsweise Laternen oder Lampen, verbessert werden, indem das reale Motiv 17 einen Schatten wirft, der mit den in einer von der Kamera 23 erzeugten Abbildung sichtbaren Lichtverhältnissen korrespondiert. Die Beleuchtungseinrichtung 105 kann hingegen dazu vorgesehen sein, grundsätzlich adäquate Lichtverhältnisse für einen Aufnahme in dem virtuellen Bildaufnahmestudio 13 herzustellen. Dazu kann die Beleuchtungseinrichtung 105 dazu ausgebildet sein, in Abhängigkeit von einer jeweiligen Einstellung Licht mit verschiedenen Emissionsspektren bzw. in verschiedenen Farben zu emittieren, um Aufnahmen bei verschiedenen Lichtverhältnissen durchführen zu können. Insbesondere kann die Beleuchtungseinrichtung 105 jedoch auch dazu ausgebildet sein, ein einem natürlichen Lichtspektrum nachgebildetes Emissionsspektrum weißer Farbe zu emittieren, um eine natürlich wirkende Beleuchtung in dem virtuellen Bildaufnahmestudio 13 bereitstellen zu können.

Um die Darstellung 19 des virtuellen Hintergrunds 21 erzeugen und die Lichtquellen 35 zur Wiedergabe der Darstellung ansteuern zu können, weist die Hintergrund-Wiedergabeeinrichtung 15 eine Steuereinheit 37 auf, welche mit einem Speicher 39 verbunden ist. In dem Speicher 39 kann insbesondere ein Modell des virtuellen Hintergrunds 21 gespeichert sein, so dass die Steuereinheit 37 anhand des Modells den virtuellen Hintergrund 21 und entsprechende Eingangsbilddaten E generieren kann, welche die Darstellung 19 repräsentieren. Ferner kann die Steuereinheit 37 dazu ausgebildet sein, den virtuellen Hintergrund 21 auf die Hintergrund-Wiedergabeeinrichtung 15 und insbesondere die zweidimensionale Anordnung der Lichtquellen 35 zu projizieren. Die Steuereinheit 37 bildet insofern eine Komponente einer Steuereinrichtung 73 des Hintergrundwiedergabe- und Aufnahmesystems 10, welches zudem eine beispielhaft in der Kamera 23 angeordnete Bildauswerteeinrichtung 71 umfasst.

Ferner weist die Hintergrund-Wiedergabeeinrichtung 15 eine Schnittstelle 103 und die Kamera 23 eine Schnittstelle 101 auf, über welche insbesondere Informationen I von der Kamera 23 an die Hintergrund-Wiedergabeeinrichtung 15 übermittelbar sein können. Insbesondere kann die Steuereinheit 37 der Hintergrund-Wiedergabeeinrichtung 15 dazu ausgebildet sein, die aktive Beleuchtungseinrichtung 31 in Abhängigkeit von einer von der Kamera 23 empfangenen Information I zu steuern, wie nachstehend noch näher erläutert ist.

Eine mögliche Ausführung der zugeordneten Kamera ist in Fig. 2 schematisch gezeigt. Die Kamera 23 weist einen Kamerakörper 53 auf, an welchem ein Objektiv 59 befestigt ist. Das Objektiv 59 kann dabei insbesondere als Wechselobjektiv ausgebildet sein, so dass wahlweise verschiedenartig ausgebildete Objektive 59 mit dem Kamerakörper 53 verbunden werden können und stets ein für eine jeweilige Aufnahme optimales Objektiv 59 gewählt werden kann. Das Objektiv 59 weist drei Objektivringe 81 auf, mittels derer jeweilige Parameter des Objektivs 59 eingestellt werden können. Beispielsweise können eine Fokusentfernung, eine Brennweite, ein Zoom-Faktor und/oder eine Blendenöffnung, insbesondere eine Öffnung einer Irisblende, durch Drehen eines jeweiligen der Objektivringe 81 einstellbar bzw. anpassbar sein. Die Kamera 23 kann insbesondere als Laufbildkamera oder Bewegtbildkamera ausgebildet sein, um aufeinanderfolgend eine Sequenz von Abbildungen erzeugen zu können, die beispielsweise als ein Film abgespielt werden kann.

Um die Objektivringe 81 einstellen zu können, ist eine Objektivring-Antriebseinheit 85 über eine Haltestange 87 mit dem Kamerakörper 53 verbunden, welche für jeden der Objektivringe 81 einen jeweiligen Objektiv-Stellmotor 83 aufweist. Mittels dieser Objektiv-Stellmotoren 83 können die Objektivringe 81 gedreht und dadurch Einstellungen an dem Objektiv 59 vorgenommen werden. Insbesondere kann die Objektivring-Antriebseinheit 85 ferngesteuert betätigbar sein, so dass die genannten Objektivparameter ferngesteuert eingestellt bzw. verändert werden können.

An dem Kamerakörper 53 ist eine ferner Wiedergabeeinrichtung 49 angeordnet, über welche einem Benutzer Informationen zu Einstellungen der Kamera 23 angezeigt werden können. Bei der Wiedergabeeinrichtung 49 kann es sich insbesondere um ein Display handeln. Zudem weist die Kamera 23 eine an dem Kamerakörper 53 angeordnete Eingabeeinrichtung 51 auf, über welche der Benutzer Einstellungen der Kamera 23 vornehmen kann. Insbesondere kann an der Eingabeeinrichtung 51 eine Belichtungszeit der Kamera 23 einstellbar sein, wobei eine mit der Eingabeeinrichtung 51 verbundene Steuereinrichtung 25 dazu ausgebildet sein kann, die Kamera 23 gemäß der eingegebenen Belichtungszeit zu steuern. Insbesondere können die Wiedergabeeinrichtung 49 und die Eingabeeinrichtung 51 von einem Touchscreen gebildet sein, über welchen dem Benutzer sowohl Informationen angezeigt als auch Benutzereingaben empfangen werden können.

Um durch das Objektiv 59 eintreffendes Licht abbilden zu erzeugen, weist die Kamera 23 ferner einen innerhalb des Kamerakörpers 53 angeordneten Bildsensor 1 auf. Dieser Bildsensor 1 kann beispielsweise auf der CMOS-Technologie oder der CCD-Technologie basierend ausgebildet sein und eine Vielzahl von lichtempfindlichen Sensorelementen aufweisen, die in mehreren Zeilen und Spalten angeordnet sein können. Um mittels eines solchen Bildsensors 1 Farbinformationen erzeugen zu können, können die Sensorelemente einen jeweiligen Farbfilter aufweisen, wobei die Farbfilter beispielsweise gemäß einem aus der Patentschrift US 3971065 A bekannten Bayer-Muster angeordnet sein können.

Die Kamera 23 weist zudem eine Ausleseschaltung 97 auf, welche dazu ausgebildet ist, die Signale der jeweiligen Sensorelemente auszulesen, aufzubereiten, zu jeweiligen Kameradaten K zu digitalisieren und an bzw. über einen Signalausgang 99 auszugeben. Dazu kann die Ausleseschaltung 97 insbesondere Verstärker, Multiplexer, Analog-Digital-Wandler, Pufferspeicher und/oder Mikrocontroller umfassen. Letztlich kann somit von der Kamera 23 ein Bilddatensatz B erzeugt werden, welcher der Abbildung bzw. einer Abbildung eines Gesichtsfelds der Kamera 23 entspricht, und der Bilddatensatz B kann über den Signalausgang 99 ausgegeben werden. Um das Gesichtsfeld der Kamera 23 überprüfen und die Kamera 23 auf einen jeweiligen Bildausschnitt ausrichten zu können, ist an dem Kamerakörper 53 ferner ein Sucher 79 angeordnet, durch welchen ein Kameramann hindurchsehen kann. Zudem ist die Steuereinrichtung 25 mit einem Speicher 47 verbunden und kann beispielsweise dazu ausgebildet sein, den Bilddatensatz B wahlweise in den Speicher 47 einzuschreiben oder über den Signalausgang 99 auszugeben.

Während mit einer solchen Hintergrund-Wiedergabeeinrichtung 15 grundsätzlich Darstellungen 19 beliebiger virtueller Hintergründe 21 wiedergegeben werden können, um in dem virtuellen Bildaufnahmestudio 13 Szenen in grundsätzlich beliebigen virtuellen Umgebungen aufnehmen zu können, besteht bei derartigen Hintergrundwiedergabe- und Aufnahmesystemen 10 die Problematik, dass die Darstellung 19 des virtuellen Hintergrunds 21 mit einem künstlichen, durch die Lichtquellen 35 vorgegebenen Emissionsspektrum wiedergegeben wird, welches sich von einem Lichtspektrum in einem dem virtuellen Hintergrund 21 entsprechenden realen Hintergrund, in welchem natürliche Lichtverhältnisse herrschen, unterscheidet. Zwar können die Lichtquellen 35 derart angesteuert werden, dass dieser Unterschied für einen menschlichen Betrachter nicht wahrnehmbar ist und die wiedergegebene Darstellung 19 natürlich anmutet, jedoch können aufgrund dieses Abweichens von einem natürlichen Lichtspektrum ungewünschte Effekte in der von der Kamera 23 erzeugten Abbildung der Darstellung 19 des virtuellen Hintergrunds 21 auftreten.

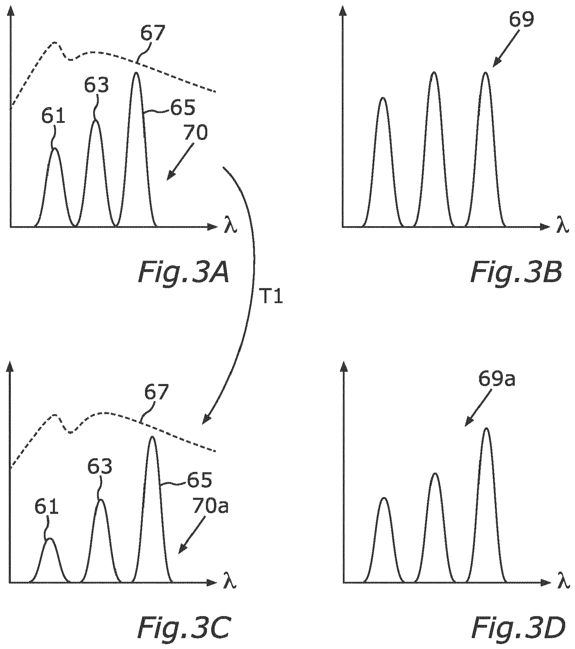

Insbesondere können die lichtempfindlichen Sensorelemente der Kamera 23 ein jeweiliges Empfindlichkeitsspektrum aufweisen, gemäß welchem die lichtempfindlichen Sensorelemente einfallendes Licht in Bildsignale wandeln. Die Sensorelemente, die auch als Pixel des Bildsensors 1 bezeichnet werden können, können mit jeweiligen Farbfiltern versehen sein, so dass für einzelne Sensorelemente schmalbandige Empfindlichkeitsspektren vorgegeben und die Sensorelemente für bestimmte Wellenlängen sensitiv sein können. Anhand der Signale der Sensorelemente können die abgebildeten Farben gemäß einer Kameratransformationsvorschrift bestimmt werden, wobei diese Kameratransformationsvorschrift insbesondere von einer Abbildung unter natürlichen Lichtverhältnissen ausgehen kann. Stimmen die Empfindlichkeitsspektren jedoch nicht mit den Emissionsspektren der Lichtquellen 35 überein, kann es zu Verschiebungen zwischen dem emittierten Lichtspektrum an der Hintergrund-Wiedergabeeinrichtung 15 und dem abgebildeten Lichtspektrum kommen, wie die Figuren 3A und 3B veranschaulichen.

Fig. 3A zeigt schematisch ein künstliches quasi-weißes Lichtspektrum, welches mittels der Hintergrund-Wiedergabeeinrichtung 15 generiert werden kann. Hierzu werden ein erstes Emissionsspektrum 61, ein zweites Emissionsspektrum 63 und ein drittes Emissionsspektrum 65 gemischt, wobei das erste Emissionsspektrum 61 beispielsweise von einer blauen Leuchtdiode 44, das zweite Emissionsspektrum 63 von einer grünen Leuchtdiode 44 und das dritte Emissionsspektrum 65 von einer roten Leuchtdiode 44 generiert werden kann, so dass das emittierte Lichtspektrum 70 durch die Überlagerung der schmalbandigen Emissionsspektren 61, 63 und 65 entsteht. Obwohl das durch die sich überlagernden Emissionsspektren 61, 63 und 65 emittierte Licht auf einen menschlichen Betrachter wie natürliches Weißlicht wirken kann, weicht das an der Hintergrund-Wiedergabeeinrichtung 15 generierte Licht ersichtlich von einem durch die gestrichelte Linie schematisch veranschaulichten kontinuierlichen weißen Lichtspektrum 67 natürlichen Lichts ab.

Die Empfindlichkeitsspektren der lichtempfindlichen Sensorelemente der Kamera 23 können jedoch für eine Aufnahme unter natürlichen Lichtverhältnissen, also unter Annahme des natürlichen Lichtspektrums 67, ausgelegt sein, so dass das Empfindlichkeitsspektrum des Bildsensors 1 insgesamt dem Lichtspektrum 67 nachgebildet sein kann. Die lichtempfindlichen Sensorelemente bzw. der Bildsensor 1 können bzw. kann daher besonders sensitiv für solche Wellenlängen λ sein, bei welchen das natürliche Lichtspektrum 67 ein Maximum erreicht.

Wie Fig. 3B zeigt, kann die Überlagerung zwischen dem emittierten Lichtspektrum 70 und dem natürlichem Licht 67 nachempfundenen Empfindlichkeitsspektrum der lichtempfindlichen Sensorelemente der Kamera 23 dazu führen, dass in dem von der Kamera 23 abgebildeten Spektrum 69 die Emissionsspektren 61 und 63 gegenüber dem Emissionsspektrum 65 verstärkt sind, so dass sich das von der Kamera 23 abgebildete Spektrum 69 von dem an der Hintergrund-Wiedergabeeinrichtung 15 durch die Lichtspektren 61, 63 und 65 erzeugten Lichtspektrum 70 unterscheidet und eine Farbverschiebung entsteht.

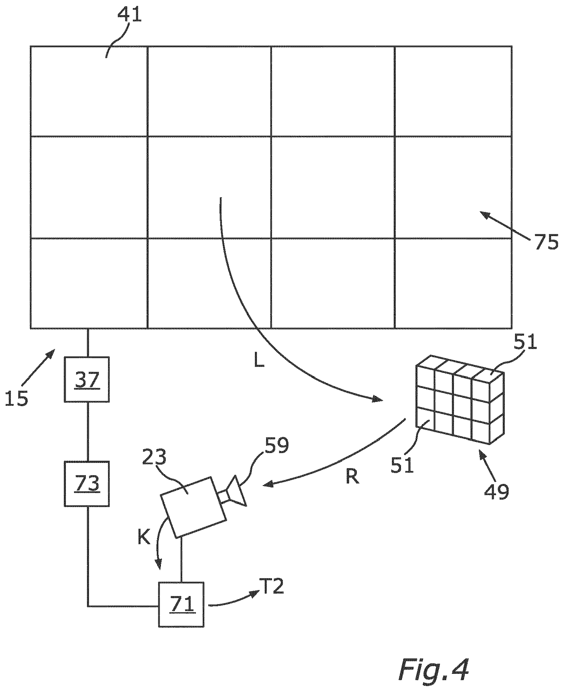

Um diesem Problem zu begegnen, ist die Steuereinrichtung 73 des Hintergrundwiedergabeund Aufnahmesystems 10 dazu ausgebildet, die Hintergrund-Wiedergabeeinrichtung 15 zum Wiedergeben zumindest einer Kalibrierdarstellung 75 anzusteuern, wobei, wie Fig. 4 veranschaulicht, als Kalibrierdarstellung 75 beispielsweise eine einfarbige weiße Darstellung wiedergegeben werden kann. Diese Kalibrierdarstellung 75 kann mittels der Kamera 23 abgebildet werden, wobei die Steuereinrichtung 73 dazu ausgebildet sein kann, anhand der von der Kamera 23 erzeugten Abbildung der Kalibrierdarstellung 75 zumindest eine erste Transformationsvorschrift T1 zu bestimmen, welche die Ansteuerung der Hintergrund-Wiedergabeeinrichtung 15 betrifft. Diese erste Transformationsvorschrift T1 wird dabei derart bestimmt, dass die Darstellung 19 des virtuellen Hintergrunds 21 von der Kamera 23 wie bei natürlichen Lichtverhältnissen erfassbar ist.

Um die einfarbige weiße Kalibrierdarstellung 75 in der Hintergrund-Wiedergabeeinrichtung 15 wiederzugeben, können die Lichtquellen 35 dazu angesteuert werden, durch Mischen der Emissionsspektren 61, 63 und 65 künstliches weißes Licht zu erzeugen. Die Kamera 23 kann die Kalibrierdarstellung 75 abbilden und an die Bildauswerteeinrichtung 71 übermitteln, so dass diese in der Abbildung insbesondere die durch das abgebildete Lichtspektrum 69 (vgl. Fig. 3B) definierte Farbe mit der erwarteten bzw. durch das emittierte Spektrum 70 definierten Farbe vergleichen kann. Durch diesen Vergleich kann sodann von der Steuereinrichtung 73 des Hintergrundwiedergabe- und Aufnahmesystems 10 und/oder der Bildauswerteeinrichtung 71, die auch in der Kamera 23 angeordnet sein kann, die erste Transformationsvorschrift T1 bestimmt werden.

Die erste Transformationsvorschrift T1 kann dabei insbesondere auf die Eingangsbilddaten E angewandt werden, welche den virtuellen Hintergrund 21 repräsentieren. Wie Fig. 3C veranschaulicht, kann die erste Transformationsvorschrift T1 in dem veranschaulichten Beispiel so gewählt sein, dass bei der Anforderung einer Wiedergabe von weißem Licht bzw. von weißes Licht repräsentierenden Eingangsbilddaten E die Beiträge des Emissionsspektrums 61 und des Emissionsspektrums 63 gegenüber dem Beitrag des Emissionsspektrums 65 reduziert werden, so dass anstelle des eigentlich geforderten Emissionsspektrums 70 das transformierte Emissionsspektrum 70a an der Hintergrund-Wiedergabeeinrichtung 15 wiedergegeben wird. Wird dieses Emissionsspektrum 70a daraufhin mittels der Kamera 23 abgebildet, entspricht das abgebildete Emissionsspektrum 69a dem ursprünglich erwarteten Emissionsspektrum 70, so dass ein menschlicher Betrachter der von der Kamera 23 erzeugten Abbildung den Eindruck natürlichen weißen Lichts gewinnt.

Um die erste Transformationsvorschrift T1 zu bestimmen, können grundsätzlich auch mehrere Kalibrierdarstellungen 75 an der Hintergrund-Wiedergabeeinrichtung 15 wiedergegeben werden. So kann es beispielsweise vorgesehen sein, eine rote Kalibrierdarstellung, eine grüne Kalibrierdarstellung, eine blaue Kalibrierdarstellung und eine weiße Kalibrierdarstellung wiederzugeben und mittels der Kamera 23 abzubilden, um durch Vergleichen der jeweiligen erzeugten Kalibrierdarstellungen und der abgebildeten Kalibrierdarstellungen die erste Transformationsvorschrift T1 zu bestimmen. Insbesondere können dazu jeweilige Farbwerte der wiedergegebenen Kalibrierdarstellung 75 und der abgebildeten Kalibrierdarstellung miteinander verglichen werden, die insbesondere durch ein jeweiliges Maximum des wiedergegebenen und des abgebildeten Lichtspektrums bestimmt sein können.

Ferner kann die Kamera 23 dazu ausgebildet sein, über die Schnittstellen 101 und 103 eine Information I über die Kalibrierdarstellung 75 an die Steuereinheit 37 der Hintergrund-Wiedergabeeinrichtung 15 zu übermitteln und die Kalibrierdarstellung 75 gewissermaßen anzufordern. Beispielsweise kann die Kamera 23 die Kalibierdarstellung 75 repräsentierende Eingangsbilddaten E an die Steuereinheit 37 übermitteln oder die Wiedergabe eines bestimmten Farbwertes anfordern, um daraufhin überprüfen zu können, wie dieser Farbwert abgebildet wird. Zudem kann, wenn die erste Transformationsvorschrift T1 in der Kamera 23 bestimmt wird, auch diese über die Schnittstellen 101 und 103 an die Steuereinheit 37 übermittelt werden, so dass die Steuereinheit 37 die erste Transformationsvorschrift T1 auf die Eingangsbilddaten E, welche die Darstellung 19 des virtuellen Hintergrunds 21 repräsentieren, anwenden kann.

Eine weitere Problematik besteht jedoch darin, dass aufgrund des gegenüber natürlichem Licht veränderten Emissionsspektrums 70 auch das reale Motiv 17 in einer von der Kamera 23 erzeugen Abbildung anders erscheinen kann als bei einer Abbildung unter natürlichen Lichtverhältnissen. Das reale Motiv 17 wird von der Hintergrund-Wiedergabeeinrichtung 15 beleuchtet, so dass das von der Hintergrund-Wiedergabeeinrichtung 15 emittierte Licht von dem realen Motiv 17 reflektiert und diese Reflexion von der Kamera 23 abgebildet wird. Aufgrund der spektralen Unterschiede zu natürlichem Licht können somit insbesondere Farben des realen Motivs 17 gegenüber einer Beleuchtung durch natürliches Licht verändert erscheinen.

Um auch diesem Problem zu begegnen, kann eine zweite Transformationsvorschrift T2 bestimmt werden, welche auf die von der Kamera 23 erzeugten Kamerabilddaten K angewandt werden kann. Dies kann beispielsweise in Kenntnis der Emissionsspektren 61, 63 und 65 der Lichtquelle 35 der Hintergrund-Wiedergabeeinrichtung 15 und/oder in Kenntnis der ersten Transformationsvorschrift T1 durch eine Berechnung oder durch Nachschlagen in einer Nachschlagetabelle, die beispielsweise in dem Speicher 39 hinterlegt sein kann, erfolgen. In den Speicher 39 können auch Berechnungsvorschriften zur Berechnung der zweiten Transformationsvorschrift T2 hinterlegt sein und die Steuereinrichtung 73 kann dazu ausgebildet sein, die zweite Transformationsvorschrift T2 anhand der Berechnungsvorschriften zu berechnen.

Alternativ zu einer Berechnung oder zu einem Nachschlagen kann, wie Fig. 4 zeigt, die Steuereinheit 37 der Hintergrund-Wiedergabeeinrichtung 15 dazu ausgebildet sein, die Hintergrund-Wiedergabeeinrichtung 15 zum Beleuchten eines realen Kalibrierobjekts 49 anzusteuern, welches hier als eine Farbtafel mit mehreren Farbbereichen 51 ausgebildet ist, die eine in Bezug auf eine Beleuchtung durch natürliche Lichtverhältnisse klar definierte Farbe aufweisen. Eine von der Hintergrund-Wiedergabeeinrichtung 15 erzeugte Beleuchtung L trifft somit auf das Kalibrierobjekt 49, welches diese Beleuchtung L reflektiert, so dass die Kamera 23 die Reflexion R aufnehmen kann. Die von der Kamera 23 generierte Abbildung des realen Kalibrierobjekts 49 kann sodann der Bildauswerteeinrichtung 71 zur Verfügung gestellt werden, welche die Farben in der Abbildung mit den Farben der jeweiligen Farbbereiche 51 vergleichen kann. Sofern bei diesem Vergleich eine Abweichung festgestellt wird, kann eine zweite Transformationsvorschrift T2 bestimmt werden. Die zweite Transformationsvorschrift T2 kann auf die von der Kamera 23 erzeugten Kamerabilddaten K derart angewandt werden, dass die Farben des abgebildeten Kalibrierobjekts 49 den definierten Farben der Farbbereiche 51, also den Farben bei einer Beleuchtung durch natürliches Licht, entsprechen.

Während einer Aufnahme einer Szene in dem virtuellen Bildaufnahmestudio 13 kann beispielsweise die erste Transformationsvorschrift T1 auf die Eingangsbilddaten E angewandt werden, so dass die Darstellung 19 des virtuellen Hintergrunds 21 von der Kamera 23 derart abgebildet werden kann, wie bei einer Abbildung eines dem virtuellen Hintergrund 21 entsprechenden realen Hintergrunds, in welchem natürliche Lichtverhältnisse herrschen, zu erwarten wäre. Die zweite Transformationsvorschrift T2 kann hingegen auf die Kamerabilddaten K angewandt werden, welche das reale Motiv 17 repräsentieren, so dass auch das reale Motiv 17 von der Kamera 23 wie unter natürlichen Lichtverhältnissen in dem virtuellen Bildaufnahmestudio 13 abgebildet werden kann. Hierzu können beispielsweise Metadaten generiert werden, welche einen jeweiligen Bildpunkt in der von der Kamera 23 generierten Abbildung entweder dem virtuellen Hintergrund 21 oder dem realen Motiv 17 zuordnen. Das Anwenden der zweiten Transformationsvorschrift T2 kann dazu beispielsweise innerhalb der Kamera 23 oder extern, insbesondere während der Postproduktion, erfolgen.

Alternativ zu einer gesonderten Anwendung der zweiten Transformationsvorschrift T2 auf einen Bereich in der von der Kamera 23 generierten Abbildung kann es auch vorgesehen sein, dass die Transformationsvorschriften T1 und T2 während der Kalibrierung derart aufeinander abgestimmt werden, dass die Transformationsvorschrift T1 auf sämtliche Eingangsdaten E und die Transformationsvorschrift T2 auf sämtliche Kamerabilddaten K angewandt werden kann, um mittels der Kamera 23 eine Abbildung generieren zu können, die wie eine Abbildung unter natürlichen Lichtverhältnissen wirkt. Hierzu können beispielsweise die vorstehend erläuterten Schritte zur Bestimmung der Transformationsvorschriften T1 und T2 iterativ unter Anwendung jeweiliger zuvor bestimmter Transformationsvorschriften T1 und T2 angewandt werden, um dadurch ein jeweiliges Paar von Transformationsvorschriften T1 und T2 zu ermitteln, bei deren Anwendung die gewünschte natürliche Wirkung erreicht wird.

Ferner kann die Steuereinrichtung 73 dazu ausgebildet sein, eine Einstellanweisung A für die Beleuchtungseinrichtung 105 in Abhängigkeit von der ersten Transformationsvorschrift T1 und/oder der zweiten Transformationsvorschrift T2 zu ermitteln, um die Beleuchtungseinrichtung 105 während der Aufnahme entsprechend einzustellen (vgl. Fig. 1). Hierdurch kann ein Emissionsspektrum der Beleuchtungseinrichtung 105 an das von der Hintergrund-Wiedergabeeinrichtung 15 unter Anwendung der ersten Transformationsvorschrift T1 emittierte Emissionsspektrum 70a, insbesondere an ein Spektrum eines von der Hintergrund-Wiedergabeeinrichtung 15 emittierten weißen Lichts, angepasst werden. Dadurch kann erreicht werden, dass das reale Motiv 17 von der Beleuchtungseinrichtung 105 emittiertes Licht in ähnlicher Weise wie von der Hintergrund-Wiedergabeeinrichtung 15 emittiertes Licht reflektiert, so dass durch Anwenden der zweiten Transformationsvorschrift T2 das reale Motiv 17 unabhängig davon, ob die Kamera 23 von der Hintergrund-Wiedergabeeinrichtung 15 oder von der Beleuchtungseinrichtung 105 emittiertes Licht aufnimmt, mit den bei natürlichen Lichtverhältnissen erwarteten Farben abgebildet werden kann.

### Bezugszeichenliste

- 1: Bildsensor
- 10: Hintergrundwiedergabe- und Aufnahmesystem
- 13: Bildaufnahmestudio
- 15: Hintergrund-Wiedergabeeinrichtung
- 17: reales Motiv, Schauspieler
- 19: Darstellung
- 21: virtueller Hintergrund
- 23: Kamera
- 31: Beleuchtungseinrichtung
- 33: LED-Wand
- 35: Lichtquelle
- 37: Steuereinheit
- 39: Speicher
- 41: Paneel
- 43: dreidimensionale Szene
- 44: Leuchtdiode
- 47: Speicher
- 49: Kalibrierobjekt
- 51: Farbbereich
- 53: Kamerakörper
- 59: Kameraobjektiv, Wechselobjektiv
- 61: erstes Emissionsspektrum
- 63: zweites Emissionsspektrum
- 65: drittes Emissionsspektrum
- 67: natürliches Lichtspektrum
- 69: abgebildetes Spektrum
- 69a: abgebildetes transformiertes Spektrum
- 70: emittiertes Lichtspektrum
- 70a: transformiertes Lichtspektrum
- 71: Bildauswerteeinrichtung
- 73: Steuereinrichtung
- 75: Kalibrierdarstellung
- 79: Sucher
- 81: Objektivring
- 83: Objektiv-Stellmotor
- 85: Objektivring-Antriebseinheit
- 87: Haltestange
- 91: erstes Objekt
- 92: zweites Objekt
- 93: drittes Objekt
- 94: viertes Objekt
- 97: Ausleseschaltung
- 99: Signalausgang
- 101: Schnittstelle
- 103: Schnittstelle
- 105: Beleuchtungseinrichtung
- 107: Scheinwerfer
- A: Einstellanweisung
- B: Bilddatensatz
- C: Beleuchtungslicht
- E: Eingangsbilddaten
- K: Kamerabilddaten
- L: Beleuchtung
- R: Reflexion
- T1: erste Transformationsvorschrift
- T2: zweite Transformationsvorschrift

## Patentansprüche

1. Verfahren zum Kalibrieren eines Hintergrundwiedergabe- und Aufnahmesystems (10) umfassend eine Hintergrund-Wiedergabeeinrichtung (15) und eine Kamera (23),
wobei die Hintergrund-Wiedergabeeinrichtung (15) dazu ausgebildet ist, hinter oder über einem realen Motiv (17) eine Darstellung (19) eines virtuellen Hintergrunds (21) für eine Aufnahme in einem virtuellen Bildaufnahmestudio (13) wiederzugeben, wobei die Hintergrund-Wiedergabeeinrichtung (15) eine Vielzahl von Lichtquellen (35) aufweist, die Licht in mehreren verschiedenen Emissionsspektren (61, 63, 65) erzeugen, und wobei die Kamera (23) dazu ausgebildet ist, während einer Aufnahme die Darstellung (19) des virtuellen Hintergrunds (21) und das reale Motiv (17) abzubilden, wobei die Kamera (23) einen Bildsensor (1) mit einer Vielzahl von lichtempfindlichen Sensorelementen aufweist, um einfallendes Licht gemäß mehreren verschiedenen Empfindlichkeitsspektren in Bildsignale zu wandeln, umfassend die Schritte:
- Wiedergeben zumindest einer Kalibrierdarstellung (75) mittels der Hintergrund-Wiedergabeeinrichtung (15) und Erzeugen einer Abbildung der zumindest einen Kalibrierdarstellung (75) mittels der Kamera (23),
- Bestimmen zumindest einer ersten Transformationsvorschrift (T1) anhand der Abbildung der Kalibrierdarstellung (75), wobei die zumindest eine erste Transformationsvorschrift (T1) die Ansteuerung der Hintergrund-Wiedergabeeinrichtung (15) betrifft,
- Bestimmen zumindest einer zweiten Transformationsvorschrift (T2), wobei die zumindest eine zweite Transformationsvorschrift (T2) eine Transformation von Kamerabilddaten (K) der Kamera (23) betrifft,
wobei die zumindest eine erste Transformationsvorschrift (T1) und die zumindest eine zweite Transformationsvorschrift (T2) derart bestimmt werden, dass die Darstellung (19) des virtuellen Hintergrunds (21) von der Kamera (23) wie bei natürlichen Lichtverhältnissen in dem virtuellen Hintergrund (21) erfassbar ist und dass das reale Motiv (17) von der Kamera (23) wie bei natürlichen Lichtverhältnissen in dem virtuellen Bildaufnahmestudio (13) erfassbar ist.

2. Verfahren nach Anspruch 1,
wobei die zumindest erste Transformationsvorschrift (T1) eine Farbtransformation von mittels der Hintergrund-Wiedergabeeinrichtung (15) wiedergegebenen Farben betrifft; und/oder
wobei die zumindest eine zweite Transformationsvorschrift (T2) eine Farbtransformation der Kamerabilddaten (K) betrifft;
und/oder
wobei die zumindest eine zweite Transformationsvorschrift (T2) berechnet und/oder in einer Nachschlagetabelle nachgeschlagen wird, insbesondere in Abhängigkeit von der zumindest einen ersten Transformationsvorschrift (T1).

3. Verfahren nach Anspruch 1 oder 2,
wobei die Kalibrierdarstellung (75) einfarbig oder mehrfarbig ist;
und/oder
wobei zum Bestimmen der zumindest einen ersten Transformationsvorschrift (T1) eine erste Kalibrierdarstellung (75), eine zweite Kalibrierdarstellung (75), eine dritte Kalibrierdarstellung (75) und eine vierte Kalibrierdarstellung (75) wiedergegeben und abgebildet werden, wobei sich die Farben der Kalibrierdarstellungen (75) voneinander unterscheiden, und wobei die zumindest eine erste Transformationsvorschrift (T1) anhand der Abbildungen der Kalibrierdarstellungen (75) bestimmt wird, wobei die Kalibrierdarstellungen (75) insbesondere einfarbig sind;
wobei vorzugsweise die erste Kalibrierdarstellung (75) rot, die zweite Kalibrierdarstellung (75) grün, die dritte Kalibrierdarstellung (75) blau und die vierte Kalibrierdarstellung (75) weiß ist.

4. Verfahren nach einem der vorhergehenden Ansprüche,
wobei zum Bestimmen der zumindest einen ersten Transformationsvorschrift (T1) Farbwerte in der Abbildung der Kalibrierdarstellung mit Farbwerten der wiedergegebenen Kalibierdarstellung (75) verglichen werden;
und/oder
wobei eine Information (I) über die zumindest eine Kalibierdarstellung (75) von der Kamera (23) an die Hintergrund-Wiedergabeeinrichtung (15) übermittelt wird und wobei die Kalibrierdarstellung (75) in Abhängigkeit von der übermittelten Information (I) wiedergegeben wird.

5. Verfahren nach einem der vorhergehenden Ansprüche,
wobei das Bestimmen der zumindest einen zweiten Transformationsvorschrift (T2) die Schritte umfasst:
- Beleuchten eines realen Kalibrierobjekts (49) durch die Hintergrund-Wiedergabeeinrichtung (15) und Erzeugen einer Abbildung des beleuchteten Kalibrierobjekts (49) mit der Kamera (23) und
- Bestimmen der zumindest einen zweiten Transformationsvorschrift (T2) anhand der Abbildung des Kalibrierobjekts (49).

6. Verfahren nach Anspruch 5,
wobei zum Bestimmen der zumindest einen zweiten Transformationsvorschrift (T2) zumindest eine Farbe des Kalibrierobjekts (49) in der Abbildung mit der Farbe des realen Kalibrierobjekts (49) verglichen wird, wobei die zumindest eine zweite Transformationsvorschrift (T2) vorzugsweise derart bestimmt wird, dass die Farbe in der Abbildung der Farbe des realen Kalibrierobjekts (49) angenähert wird;
und/oder
wobei das Kalibrierobjekt (49) eine Farbtafel aufweist, auf welcher mehrere definierte Farben wiedergegeben sind, wobei zum Bestimmen der zumindest einen zweiten Transformationsvorschrift (T2) die Farben in der Abbildung mit den Farben auf der Farbtafel verglichen werden;
und/oder
wobei die Hintergrund-Wiedergabeeinrichtung (15) zum Beleuchten des Kalibrierobjekts (49) unter Anwendung der zumindest einen ersten Transformationsvorschrift (T1) angesteuert wird.

7. Verfahren nach einem der vorhergehenden Ansprüche,
wobei die zumindest eine erste Transformationsvorschrift (T1) und die zumindest eine zweite Transformationsvorschrift (T2) derart aufeinander abgestimmt werden, dass sowohl die Darstellung (19) des virtuellen Hintergrunds (21) als auch das reale Motiv (17) von der Kamera (23) wie unter natürlichen Lichtverhältnissen abgebildet werden, wenn die zumindest eine erste Transformationsvorschrift (T1) und die zumindest eine zweite Transformationsvorschrift (T2) angewandt werden;
wobei die zumindest eine erste Transformationsvorschrift (T1) und die zumindest eine zweite Transformationsvorschrift (T2) vorzugsweise aufeinander abgestimmt werden, indem Abbildungen unter Anwendung der ersten Transformationsvorschrift (T1) und der zweiten Transformationsvorschrift (T2) erzeugt werden und die erste Transformationsvorschrift (T1) und/oder die zweite Transformationsvorschrift (T2) iterativ angepasst werden.

8. Verfahren nach einem der vorhergehenden Ansprüche,
wobei mehrere erste Transformationsvorschriften (T1) und mehrere zweite Transformationsvorschriften (T2) bestimmt werden, wobei ein Paar aus einer ersten Transformationsvorschrift (T1) und einer zweiten Transformationsvorschrift (T2) aus den mehreren ersten Transformationsvorschriften (T1) und den mehreren zweiten Transformationsvorschriften (T2) derart ausgewählt wird, dass bei Anwendung der ersten Transformationsvorschrift (T1) und der zweiten Transformationsvorschrift (T2) sowohl die Darstellung (19) des virtuellen Hintergrunds (21) als auch das reale Motiv (17) von der Kamera (23) wie unter natürlichen Lichtverhältnissen abgebildet werden.

9. Verfahren nach einem der vorhergehenden Ansprüche,
wobei die Hintergrund-Wiedergabeeinrichtung (15) als eine LED-Wand (33) ausgebildet ist, wobei die Vielzahl von Lichtquellen (35) eine Vielzahl aktiv leuchtender Leuchtdioden (44) oder Leuchtdiodeneinheiten aufweist;
und/oder
wobei sich die Hintergrund-Wiedergabeeinrichtung (15) in einer vertikalen und/oder horizontalen Ausrichtung erstreckt;
und/oder
wobei in Abhängigkeit von der zumindest einen ersten Transformationsvorschrift (T1) und/oder in Abhängigkeit von der zumindest einen zweiten Transformationsvorschrift (T2) eine Einstellanweisung (A) für eine zugeordnete Beleuchtungseinrichtung (105), insbesondere einen Scheinwerfer (107), ermittelt wird, die zum Erzeugen eines Beleuchtungslicht (C) mit einem anpassbaren Emissionsspektrum ausgebildet ist.

10. Verfahren zum Aufnehmen einer Darstellung (19) eines virtuellen Hintergrunds (21) und eines realen Motivs (17) in einem virtuellen Bildaufnahmestudio (13) mittels eines Hintergrundwiedergabe- und Aufnahmesystems (10),
bei welchem die Darstellung (19) des virtuellen Hintergrunds (21) hinter und/oder über dem realen Motiv (17) mittels einer Hintergrund-Wiedergabeeinrichtung (15) wiedergegeben und die Darstellung (19) des virtuellen Hintergrunds (21) und das reale Motiv (17) mittels einer Kamera (23) abgebildet werden,
bei welchem das Hintergrundwiedergabe- und Aufnahmesystem (10) gemäß einem Verfahren nach einem der vorhergehenden Ansprüche kalibriert ist, und
bei welchem die erste Transformationsvorschrift (T1) und die zweite Transformationsvorschrift (T2) bei dem Aufnehmen der Darstellung (19) des virtuellen Hintergrunds (21) und des realen Motivs (17) angewandt werden.

11. Verfahren nach 10,
wobei die zweite Transformationsvorschrift (T2) auf sämtliche von der Kamera (23) erzeugten Bilddaten (B) angewandt wird,
oder
wobei die zweite Transformationsvorschrift (T2) lediglich auf Kamerabilddaten (K) angewandt wird, die das reale Motiv (17) repräsentieren.

12. Verfahren nach Anspruch 10 oder 11,
wobei an der Hintergrund-Wiedergabeeinrichtung (15) wiederzugebende Eingangsbilddaten (E) mittels der ersten Transformationsvorschrift (T1) transformatiert und wiedergegeben werden;
und/oder
wobei Metadaten erzeugt werden, die einen jeweiligen Bildpunkt in einer von der Kamera (23) erzeugten Abbildung der Darstellung (19) des virtuellen Hintergrunds (21) oder dem realen Motiv (17) zuordnen;
und/oder
wobei eine in dem virtuellen Bildaufnahmestudio (13) angeordnete Beleuchtungseinrichtung (105), insbesondere ein Scheinwerfer (107), die zum Erzeugen von einem Beleuchtungslicht (C) mit einem anpassbaren Emissionsspektrum ausgebildet ist, in Abhängigkeit von der zumindest einen ersten Transformationsvorschrift (T1) und/oder in Abhängigkeit von der zumindest einen zweiten Transformationsvorschrift (T2) eingestellt wird.

13. Hintergrundwiedergabe- und Aufnahmesystem (10) für ein virtuelles Bildaufnahmestudio (13),
umfassend eine Hintergrund-Wiedergabeeinrichtung (15) und eine Kamera (23),
wobei die Hintergrund-Wiedergabeeinrichtung (15) dazu ausgebildet ist, hinter oder über einem realen Motiv (17) eine Darstellung (19) eines virtuellen Hintergrunds (21) für eine Aufnahme in dem virtuellen Bildaufnahmestudio (13) wiederzugeben, und wobei die Kamera (23) dazu ausgebildet ist, die Darstellung (19) des virtuellen Hintergrunds (21) und das reale Motiv (17) abzubilden,
wobei das Hintergrundwiedergabe- und Aufnahmesystem (10) eine Steuereinrichtung (73) aufweist, welche dazu ausgebildet ist, das Kalibrierverfahren nach einem der Ansprüche 1 bis 9 und/oder das Verfahren zum Aufnehmen einer Darstellung (19) eines virtuellen Hintergrunds (21) nach einem der Ansprüche 10 bis 12 durchzuführen.

14. Hintergrundwiedergabe- und Aufnahmesystem (10) nach Anspruch 13,
wobei die Hintergrund-Wiedergabeeinrichtung (15) und die Kamera (23) eine jeweilige Schnittstelle (101, 103) aufweisen, über welche die Kamera (23) und die Hintergrund-Wiedergabeeinrichtung (15) in Kommunikation zueinander stehen, wobei die Kamera (23) dazu ausgebildet ist, eine Information (I) über die Kalibrierdarstellung (75) an die Hintergrund-Wiedergabeeinrichtung (15) zu übermitteln, wobei die Hintergrund-Wiedergabeeinrichtung (15) dazu ausgebildet ist, die Kalibrierdarstellung (75) in Abhängigkeit von der empfangenen Information (I) wiederzugeben.

15. Hintergrundwiedergabe- und Aufnahmesystem (10) nach Anspruch 13 oder 14,
wobei die Steuereinrichtung (73), insbesondere die Kamera (23), eine Bildauswerteeinrichtung (71) umfasst, welche dazu ausgebildet ist, die Abbildung der Kalibrierdarstellung mit der Kalibrierdarstellung (75) zu vergleichen und die erste Transformationsvorschrift (T1) zu bestimmen;
und/oder
wobei die Steuereinrichtung (73) dazu ausgebildet ist, die zweite Transformationsvorschrift (T2) zu bestimmen;
und/oder
wobei die Steuereinrichtung (73) dazu ausgebildet ist, in Abhängigkeit von der zumindest einen ersten Transformationsvorschrift (T1) und/oder in Abhängigkeit von der zumindest einen zweiten Transformationsvorschrift (T2) eine Einstellanweisung (A) für eine zugeordnete Beleuchtungseinrichtung (105), insbesondere einen Scheinwerfer (107), welche zum Erzeugen von Beleuchtungslicht (C) mit einem anpassbaren Emissionsspektrum ausgebildet ist, zu ermitteln und auszugeben.
